# EUROPEAN PATENT APPLICATION

(11) **EP 4 701 325 A1**
(43) Date of publication of application: **25.02.2026**
(21) Application number: 24806446.1
(22) Date of filing: 09.05.2024
(51) Int. Cl.: H04W 76/27

(54) **COMMUNICATION METHOD, APPARATUS AND SYSTEM**

(30) Priority: 13.05.2023 CN 202310541342
(71) Applicant: Huawei Technologies Co., Ltd., Shenzhen, Guangdong 518129 (CN)
(72) Inventor: SHA, Tong, Shenzhen, Guangdong 518129 (CN); LI, Bingzhao, Shenzhen, Guangdong 518129 (CN); XU, Bin, Shenzhen, Guangdong 518129 (CN); ZHANG, Haisen, Shenzhen, Guangdong 518129 (CN)
(74) Representative: Pfenning, Meinig & Partner mbB
(86) International application number: PCT/CN2024/091936
(87) International publication number: WO 2024/235094

(57) **Abstract**

This application relates to the field of communication technologies, and provides a communication method and apparatus, and a system, to improve efficiency of receiving a multicast service. The communication method includes: sending a radio resource control RRC resume request message to a first network device; receiving an RRC resume message sent by the first network device; entering an RRC connected state from an RRC inactive state; and receiving a first multicast based on a first multicast broadcast service radio bearer MRB, where the first MRB is determined based on the RRC resume message and first multicast configuration information, the first multicast configuration information is obtained from a second network device, and the second network device is a network device in a last serving cell in an RRC connected state.

## Description

This application claims priority to Chinese Patent Application No. 202310541342.3, filed with the China National Intellectual Property Administration on May 13, 2023 and entitled "COMMUNICATION METHOD AND APPARATUS, AND SYSTEM", which is incorporated herein by reference in its entirety.

### TECHNICAL FIELD

This application relates to the field of communication technologies, and in particular, to a communication method and apparatus, and a system.

### BACKGROUND

A terminal device in an RRC inactive state may perform cell reselection for a plurality times in a moving process. After each reselection, if a camped serving cell can provide a multicast for the terminal device in the RRC inactive state, the terminal device obtains corresponding multicast configuration information from an MCCH message delivered from the serving cell and used for a multicast configuration.

However, for a same multicast, multicast configuration information provided by serving cells selected by the terminal device for camping on may include configuration information of different MRBs. The terminal device receives first multicasts in different serving cells based on the different MRBs. After the terminal device resumes an RRC connected state, a serving base station transmits a corresponding multicast based on an MRB configured by an anchor base station. However, after performing cell reselection for a plurality of times, the terminal device cannot restore the MRB configured by the anchor base station. As a result, it is difficult for the terminal device to correctly receive the multicast after resuming the RRC connected state.

### SUMMARY

Embodiments of this application provide a communication method and apparatus, and a system, to improve efficiency of receiving a multicast service.

According to a first aspect, an embodiment of this application provides a communication method, applied to a terminal device or a chip in a terminal device. The method includes:
sending a radio resource control RRC resume request message to a first network device; receiving an RRC resume message sent by the first network device; entering an RRC connected state from an RRC inactive state; and receiving a first multicast based on a first multicast broadcast service radio bearer MRB, where the first MRB is determined based on the RRC resume message and first multicast configuration information, the first multicast configuration information is obtained from a second network device, and the second network device is a network device in a last serving cell in an RRC connected state.

According to the communication method provided in this application, after entering the RRC connected state, the terminal device can resume the first MRB based on the RRC resume message and the pre-stored first multicast configuration information. In this way, configuration information of the MRB of the first network device is same as configuration information determined by the terminal device, and the terminal device can correctly receive, based on the first MRB, the first multicast sent by the first network device. This improves multicast receiving efficiency.

In a possible implementation, before sending the RRC resume request message to the first network device, the method includes:
receiving, in the RRC connected state, the first multicast configuration information sent by the second network device; receiving the first multicast based on the first MRB; receiving a first RRC release message sent by the second network device; and entering the RRC inactive state from the RRC connected state.

In a possible implementation, after entering the RRC inactive state from the RRC connected state and before sending the RRC resume request message to the first network device, the method further includes:
receiving the first multicast based on second multicast configuration information.

In a possible implementation, the second multicast configuration information is sent by the first network device, the second network device, or a third network device, and the third network device is a network device in a serving cell in the RRC inactive state.

In a possible implementation, both the first multicast configuration information and the second multicast configuration information include configuration information of the first MRB.

In a possible implementation, the first multicast configuration information includes an identifier of the first MRB, and the first multicast configuration information further includes at least one of a packet data channel PDCP configuration, a radio link control RLC configuration, a media access control MAC configuration, and a physical layer configuration of the first MRB.

According to a second aspect, an embodiment of this application provides a communication method, applied to a terminal device or a chip in a terminal device. The method includes:
receiving a first radio resource control RRC release message sent by a second network device, where the first RRC release message indicates a second multicast configuration information, and the second multicast configuration information is configuration information for receiving a first multicast in an RRC non-connected state in a first cell; and entering the RRC non-connected state from an RRC connected state.

According to the communication method provided in this application, the terminal device can determine the second multicast configuration information sent by the second network device in the first RRC release message and used to receive the first multicast in the RRC non-connected state in the first cell. In this way, after performing cell selection and camping on the first cell, the terminal device can directly receive the first multicast by using the second multicast configuration information in the first RRC release message, without re-obtaining the second multicast configuration information. On one hand, multicast receiving interruption caused by re-obtaining a multicast configuration is reduced, multicast receiving continuity is improved, and power consumption overheads of the terminal device are reduced. On the other hand, flexibility of providing, by a network device, a multicast configuration for the non-connected state is improved, and the network device can select a multicast configuration of a specific cell to be provided.

In a possible implementation, after entering the RRC non-connected state from the RRC connected state, the method further includes:
when performing cell selection and camping on the first cell, receiving the first multicast in the RRC non-connected state in the first cell based on the second multicast configuration information.

In a possible implementation, when cell selection is performed, the first cell is preferentially selected as a serving cell.

In a possible implementation, the first RRC release message includes an identity of the first cell.

In a possible implementation, the first cell is a serving cell configured with a first common frequency resource CFR, and the first common frequency resource is used to perform transmission on the first multicast.

In a possible implementation, the second multicast configuration information includes at least one of an identifier of the first multicast, an activation status of the first multicast, a multicast broadcast service control channel MCCH configuration, and a point-to-multipoint PTM configuration of the first multicast.

According to a third aspect, an embodiment of this application provides a communication method, applied to a network device or a chip in a network device. The method includes:
sending a first radio resource control RRC release message to a terminal device, where the first RRC release message indicates second multicast configuration information, and the second multicast configuration information is configuration information for receiving a first multicast in an RRC non-connected state in a first cell.

According to the communication method provided in this application, the second network device can select a multicast configuration of a specific cell to be provided, and directly indicate the multicast configuration to the terminal device. Flexibility of providing, by the network device, a multicast configuration in the non-connected state is improved. The second multicast configuration information sent by the second network device in the first RRC release message may be used to receive the first multicast in the RRC non-connected state in the first cell. In this way, after performing cell selection and camping on the first cell, the terminal device can directly receive the first multicast by using the second multicast configuration information in the first RRC release message, without re-obtaining the second multicast configuration information. Multicast receiving interruption caused by re-obtaining a multicast configuration is reduced, multicast receiving continuity is improved, and power consumption overheads of the terminal device are reduced.

In a possible implementation, the first RRC release message includes an identity of the first cell.

In a possible implementation, the first cell is a serving cell configured with a first common frequency resource CFR, and the first common frequency resource is used to perform transmission on the first multicast.

In a possible implementation, the second multicast configuration information includes at least one of an identifier of the first multicast, an activation status of the first multicast, a multicast broadcast service control channel MCCH configuration, and a point-to-multipoint PTM configuration of the first multicast.

According to a fourth aspect, an embodiment of this application provides a communication method, applied to a terminal device or a chip in a terminal device. The method includes:
receiving a first radio resource control RRC release message sent by a second network device, where the first RRC release message indicates a first radio access network-based notification area RNA; entering an RRC inactive state from an RRC connected state; and sending an RRC connection resume request message to a first network device when a first condition and a second condition are met, where the first network device is a network device in a serving cell, the first condition is that a first timer expires or the serving cell does not belong to the first RNA, and the RRC connection resume request message carries a first cause value; and the second condition is that a multicast is not received in the RRC inactive state, or a multicast is received in the RRC inactive state and second multicast configuration information is sent in the serving cell, and the second multicast configuration information is configuration information for receiving a first multicast in the RRC inactive state in the serving cell.

According to the communication method provided in this application, the first cause value is set to indicate that the terminal device meets the first condition and the second condition, so that the network device can accurately learn of a status of the terminal device based on the first cause value. This improves accuracy of responding by the network device based on the status of the terminal device, and helps the network device meet a data transmission performance requirement of the terminal device.

In a possible implementation, the first cause value is RNA update.

In the foregoing possible implementation, the conditions of using "RNA update" as the resume cause value are reset. Only when the first condition and the second condition are met, the terminal device uses "RNA update" as the resume cause value, to request the first network device to resume an RRC connection. This avoids a case in which the terminal device cannot successfully receive a multicast because the first network device still releases the terminal device to an RRC non-connected state based on the cause value of RNA update and does not provide a multicast configuration in the RRC inactive state for the terminal device when the terminal device updates an RNA and needs to obtain the multicast configuration.

In a possible implementation, the first multicast is a joined multicast in an active state.

In a possible implementation, the second multicast configuration information is carried in a first MCCH message.

In a possible implementation, the second multicast configuration information includes at least one of an identifier of the first multicast, a G-RNTI of the first multicast, and an MRB configuration of the first multicast.

According to a fifth aspect, this application provides a communication method, applied to a terminal device or a chip in a terminal device. The method includes:
receiving a first radio resource control RRC release message sent by a second network device, where the first RRC release message indicates a first radio access network-based notification area RNA; entering an RRC inactive state from an RRC connected state; and sending an RRC connection resume request message to a first network device when a first condition and a third condition are met, where the first network device is a network device in a serving cell, the first condition is that a first timer expires or the serving cell does not belong to the first RNA, and the RRC connection resume request message carries a second cause value; and the third condition is that the first RRC release message indicates to receive a multicast in the RRC inactive state and second multicast configuration information is not sent in the serving cell, and the second multicast configuration information is configuration information for receiving a first multicast in the RRC inactive state in the serving cell.

According to the communication method provided in embodiments of this application, when the terminal device updates an RNA and needs to re-obtain a multicast configuration, the second cause value is used as a resume cause value, to ensure that the first network device can obtain a context of the terminal device from the second network device (last serving gNB) based on the RRC resume request message of the terminal device, so that the terminal device enters an RRC connected state; and provide a multicast for the terminal device; or provide the multicast configuration for the terminal device in the RRC inactive state, and provide a multicast for the terminal device in the inactive state. This ensures that the terminal device can successfully receive the multicast and improve multicast receiving efficiency.

In a possible implementation, the first multicast is a joined multicast in an active state.

In a possible implementation, the second multicast configuration information is carried in a first MCCH message.

In a possible implementation, that the second multicast configuration information is not sent in the serving cell includes:
the first multicast broadcast service control channel MCCH message sent in the serving cell does not include the second multicast configuration information; or first system information is not sent in the serving cell, and the first system information is used to send configuration information of the first MCCH.

In a possible implementation, the second cause value is one of mobile originated data mo-Data, mobile originated signaling mo-Signaling, mobility terminal access mt-Access, or multicast broadcast service access.

According to the foregoing possible implementation, when the terminal device updates the RNA and needs to re-obtain the multicast configuration, one of the mobile originated data mo-Data, the mobile originated signaling mo-Signaling, the mobility terminal access mt-Access, or the multicast broadcast service access is used as a resume cause value, to ensure that the first network device can obtain the context of the terminal device from the second network device (last serving gNB) based on the RRC resume request message of the terminal device, so that the terminal device enters the RRC connected state; and provide the multicast for the terminal device; or provide the multicast configuration for the terminal device in the RRC inactive state, and provide the multicast for the terminal device in the inactive state. This ensures that the terminal device can successfully receive the multicast and improve multicast receiving efficiency.

In a possible implementation, the second cause value is a third cause value, and the third cause value indicates multicast broadcast service access and RNA update.

According to the foregoing possible implementation, when the terminal device updates the RNA and needs to re-obtain the multicast configuration, the third cause value is set as a resume cause value, to ensure that the first network device can obtain the context of the terminal device from the second network device (last serving gNB) based on the RRC resume request message of the terminal device, so that the terminal device enters the RRC connected state; and provide the multicast for the terminal device; or provide the multicast configuration for the terminal device in the RRC inactive state, and provide the multicast for the terminal device in the inactive state. This ensures that the terminal device can successfully receive the multicast and improve multicast receiving efficiency.

In a possible implementation, after sending the RRC connection resume request message to the first network device, the method further includes: receiving a second RRC release message sent by the first network device; and
obtaining the second multicast configuration information.

In a possible implementation, the second multicast configuration information is carried in the second RRC release message, or the second multicast configuration information is carried in the first system information and/or the first MCCH message in the serving cell.

According to a sixth aspect, an embodiment of this application provides a communication method, applied to a network device or a chip in a network device. The method includes:
receiving a first radio resource control RRC connection resume request message sent by a terminal device, where the RRC connection resume request message carries a third cause value, the third cause value indicates RNA update and that second multicast configuration information is not sent in a serving cell, and the second multicast configuration information is configuration information for receiving a first multicast in an RRC inactive state in the serving cell.

In a possible implementation, the method further includes:
sending a context retrieval request message to a second network device when a multicast in the RRC inactive state can be provided, where the context retrieval request message carries the third cause value;
receiving a context retrieval failure message sent by the second network device, where the context retrieval failure message includes a second RRC release message and an identifier of the first multicast; and
sending the second multicast configuration information and the second RRC release message to the terminal device.

In a possible implementation, the second multicast configuration information is carried in the second RRC release message, or the second multicast configuration information is carried in first system information and/or a first multicast broadcast service control channel MCCH message in the serving cell.

In a possible implementation, the context retrieval request message further carries a set of an identifier of a multicast that can be provided by the first network device for the RRC inactive state, and the set of the identifier of the multicast includes the identifier of the first multicast.

In a possible implementation, the method further includes:
sending the context retrieval request message to the second network device when providing the multicast in the RRC inactive state is not supported, where the context retrieval request message does not carry the third cause value;
receiving a context retrieval response message sent by the second network device, where the context retrieval response message includes a context of the terminal device; and
sending an RRC resume message to the terminal device, where the RRC resume message indicates the terminal device to enter an RRC connected state from the RRC inactive state.

According to a seventh aspect, an embodiment of this application provides a communication method, applied to a network device or a chip in a network device. The method includes:
sending a first radio resource control RRC release message to a terminal device, where the first RRC release message indicates a first radio access network-based notification area RNA;
receiving a context retrieval request message sent by a first network device, where the context retrieval request message carries a third cause value, the third cause value indicates RNA update and that second multicast configuration information is not sent in a serving cell of the terminal device, the second multicast configuration information is configuration information for receiving a first multicast in an RRC inactive state in the serving cell, and the first network device is a network device in the serving cell; and
if the serving cell belongs to the first RNA, sending a context retrieval failure message to the first network device, where the context retrieval failure message carries a second RRC release message and an identifier of the first multicast; or
if the serving cell does not belong to the first RNA, sending a context retrieval response message to the first network device, where the context retrieval response message includes a context of the terminal device.

In a possible implementation, the context retrieval request message further carries a set of an identifier of a multicast that can be provided by the first network device for the RRC inactive state, and the set of the identifier of the multicast includes the identifier of the first multicast.

According to an eighth aspect, a communication apparatus is provided, and is configured to perform steps of the method according to any one of the first aspect or the possible implementations of the first aspect, the second aspect or the possible implementations of the second aspect, the fourth aspect or the possible implementations of the fourth aspect, and the fifth aspect or the possible implementations of the fifth aspect.

In a possible implementation of the eighth aspect, the communication apparatus includes a unit or a module configured to perform the method according to any one of the first aspect or the possible implementations of the first aspect, the second aspect or the possible implementations of the second aspect, the fourth aspect or the possible implementations of the fourth aspect, and the fifth aspect or the possible implementations of the fifth aspect.

In a possible implementation of the eighth aspect, the communication apparatus includes at least one processor and a memory. The at least one processor is configured to perform the method according to any one of the first aspect or the possible implementations of the first aspect, the second aspect or the possible implementations of the second aspect, the fourth aspect or the possible implementations of the fourth aspect, and the fifth aspect or the possible implementations of the fifth aspect.

According to a ninth aspect, a terminal device is provided. The terminal device includes the communication apparatus provided in the eighth aspect.

According to a tenth aspect, a communication apparatus is provided, and includes at least one processor and a memory. The at least one processor is configured to perform steps of the method according to any one of the third aspect or the possible implementations of the third aspect, the sixth aspect or the possible implementations of the sixth aspect, and the seventh aspect or the possible implementations of the seventh aspect.

In a possible implementation of the tenth aspect, the communication apparatus includes the at least one processor and the memory. The at least one processor includes a unit and a module configured to perform the method according to any one of the third aspect or the possible implementations of the third aspect, the sixth aspect or the possible implementations of the sixth aspect, and the seventh aspect or the possible implementations of the seventh aspect.

In a possible implementation of the tenth aspect, the communication apparatus includes the at least one processor and the memory. The at least one processor is configured to perform the method according to any one of the third aspect or the possible implementations of the third aspect, the sixth aspect or the possible implementations of the sixth aspect, and the seventh aspect or the possible implementations of the seventh aspect.

According to an eleventh aspect, a network device is provided. The terminal includes the communication apparatus provided in the tenth aspect.

According to a twelfth aspect, a computer program product is provided. The computer program product includes a computer program. When the computer program is executed by a processor, the method according to any one of the foregoing aspects or the possible implementations of the foregoing aspects is performed.

According to a thirteenth aspect, a computer-readable storage medium is provided. The computer-readable storage medium stores a computer program. When the computer program is executed, the method according to any one of the foregoing aspects or the possible implementations of the foregoing aspects is performed.

According to a fourteenth aspect, a communication system is provided. The communication system includes the foregoing terminal device and the foregoing network device.

According to a fifteenth aspect, a chip system is provided. The chip system includes a processor, configured to implement the method according to any one of the foregoing aspects.

In a possible design, the chip system may further include a memory, configured to implement the method according to any one of the foregoing aspects.

### BRIEF DESCRIPTION OF DRAWINGS

FIG. 1 is a system block diagram of a communication system according to an embodiment of this application;
FIG. 2 is a schematic flowchart 1 of a communication method according to an embodiment of this application;
FIG. 3 is a schematic flowchart 2 of a communication method according to an embodiment of this application;
FIG. 4 is a schematic flowchart 3 of a communication method according to an embodiment of this application;
FIG. 5 is a schematic flowchart 4 of a communication method according to an embodiment of this application;
FIG. 6 is a schematic flowchart 5 of a communication method according to an embodiment of this application;
FIG. 7A and FIG. 7B are a schematic flowchart 6 of a communication method according to an embodiment of this application;
FIG. 8 is a block diagram of an example of a communication apparatus according to an embodiment of this application;
FIG. 9 is a block diagram of another example of a communication apparatus according to an embodiment of this application;
FIG. 10 is a block diagram of another example of a communication apparatus according to an embodiment of this application;
FIG. 11 is a block diagram of another example of a communication apparatus according to an embodiment of this application;
FIG. 12 is a block diagram of a terminal according to an embodiment of this application; and
FIG. 13 is a block diagram of a network device according to an embodiment of this application.

### DESCRIPTION OF EMBODIMENTS

The following describes technical solutions of this application with reference to accompanying drawings.

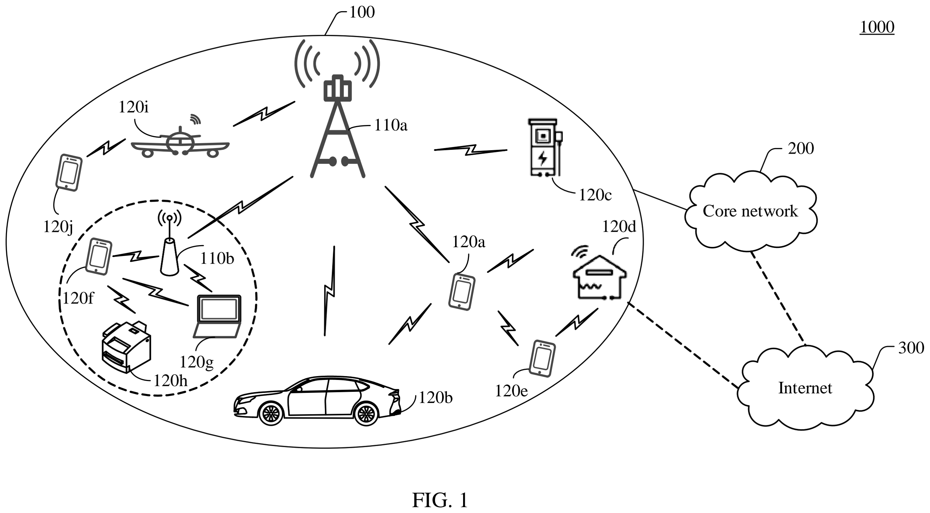

For ease of understanding embodiments of this application, a communication system shown in FIG. 1 is first used as an example to describe in detail a communication system to which embodiments of this application are applicable. FIG. 1 is a diagram of an architecture of a communication system 1000 to which an embodiment of this application is applied. The communication system includes a radio access network (Radio Access Network, RNA) 100 and a core network 200. Optionally, the communication system 1000 may further include an internet 300. The radio access network 100 may include at least one radio access network device (for example, 110a and 110b in FIG. 1, which may also be referred to as RNA nodes), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of a core network device and logical functions of the radio access network device are integrated into a same physical device, or some functions of a core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next-generation base station in a 6th generation (6th generation, 6G) mobile communication system, a base station in a future mobile communication system, an access node in a Wi-Fi system, or the like; or may be a module or a unit that completes some functions of a base station. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

In another possible scenario, a plurality of RAN nodes coordinate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as UE, a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application.

The base station and the terminal device may be fixed or movable. The base station and the terminal device may be deployed on land, including an indoor or outdoor scenario and a handheld or vehicle-mounted scenario, or may be deployed on water, or may be deployed on an airplane, a balloon, and an artificial satellite. Application scenarios of the base station and the terminal device are not limited in embodiments of this application.

Roles of the base station and the terminal device may be relative. For example, a helicopter or uncrewed aerial vehicle 120i in FIG. 1 may be configured as a mobile base station. For those terminal devices 120j accessing the radio access network 100 via 120i, the terminal device 120i is a base station. However, for the base station 110a, 120i is a terminal device, that is, communication between 110a and 120i is performed based on a radio air interface protocol. Certainly, communication between 110a and 120i may alternatively be performed based on an interface protocol between base stations. In this case, for 110a, 120i is also a base station. Therefore, the base station and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

Communication between a base station and a terminal device, between base stations, and between terminal devices may be performed through a licensed spectrum, an unlicensed spectrum, or both a licensed spectrum and an unlicensed spectrum, which may be performed through a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a network device described below may be the radio access network device in the communication system shown in FIG. 1, or a module (for example, a chip) in a radio access network device, or a control subsystem including a base station function. The control subsystem including the base station function herein may be a control center in the foregoing application scenarios, such as a smart grid, industrial control, smart transportation, and a smart city.

A terminal device described below may be the terminal device in the communication system shown in FIG. 1, a module (for example, a chip or a modem) in a terminal device, or an apparatus including a terminal device function.

The following explains and describes key technical features in this application.

In this application, "sending" and "receiving" indicate a direction of signal/information delivery. For example, "sending information to a network device" may be understood as a destination of the information being the network device, and may include direct sending through an air interface, or indirect sending by another unit or module through an air interface. "Receiving information from a terminal device" may be understood as a source of the information being the terminal device, and may include direct receiving from the terminal device through an air interface, or indirect receiving from the terminal device from another unit or module through an air interface. "Sending" may alternatively be understood as "outputting" of a chip interface, and "receiving" may alternatively be understood as "inputting" of a chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

Radio resource control (Radio Resource Control, RRC) status: In a 5G new radio (New Radio, NR) system, a terminal device currently has three RRC states: an RRC idle (RRC idle) state, an RRC inactive (RRC inactive) state, and an RRC connected (RRC connected) state.

When the terminal device is in the RRC connected state, the terminal device establishes an RRC connection to a network device, the terminal device can normally perform data transmission with the network device, and the network device can maintain context (context) information of the terminal device. When the terminal device is in the RRC inactive state, the terminal device does not establish an RRC connection to the network device, and the terminal device does not perform data transmission with the network device, but the network device may continue to maintain context information of the terminal device, so that the RRC connection can be quickly resumed when the terminal device and the network device have a data transmission requirement. When the terminal device is in the RRC idle state, the terminal device does not establish an RRC connection to the network device, and the terminal device does not perform data transmission with the network device.

In an embodiment, the network device may send an RRC release (RRC release) message to the terminal device in the RRC connected state, to release the terminal device to the RRC idle state or the RRC inactive state. For example, if the RRC release message carries a suspend configuration (suspendConfig), the terminal device enters the RRC inactive state from the RRC connected state, the terminal device suspends the RRC connection to the network device, and the network device continues to maintain a downlink context of the terminal device. In some examples, for a terminal device that does not frequently perform data transmission, a network device may enable the terminal device to remain in the RRC inactive state. Then, when the terminal device in the RRC inactive state meets a specific trigger condition, for example, when an uplink service arrives or when a paging message sent by a network device is received, the terminal device may request the network device to resume an RRC connection. For example, the terminal device sends an RRC resume request (RRC resume request) message to the network device. Based on an actual scenario and requirement, the network device sends an RRC resume (RRC resume) message to the terminal device, so that the terminal device enters the RRC connected state; or sends an RRC release message carrying suspendConfig to the terminal device, so that the terminal device remains in the RRC inactive state; or sends an RRC release message not carrying suspendConfig to the terminal device, so that the terminal device enters the RRC idle state.

If the RRC release message sent by the network device does not include suspendConfig, the terminal device directly enters the RRC idle state from the RRC connected state. When the terminal device in the RRC idle state has a data transmission requirement, the terminal device may request the network device to re-establish an RRC connection. For example, the terminal device sends an RRC setup request (RRC setup request) message to the network device, and enters the RRC connected state after receiving an RRC setup (RRC setup) message sent by the network device.

Cell reselection and cell selection: In a moving process of a terminal device entering an RRC idle state or RRC inactive state, the terminal device measures a receive power and signal quality of a cell according to a cell selection criterion (also referred to as an S criterion), and determines whether the cell is appropriate for access, to select an accessible cell for camping on. This process is referred to as cell selection. When camping on a serving cell, the terminal device measures signal quality of the serving cell and a neighboring cell according to a cell reselection criterion (also referred to as an R criterion). If the serving cell has poor quality and the neighboring cell has good signal quality, the terminal device actively reselects a cell with better signal quality as a serving cell. This process is referred to as cell reselection.

A serving cell of a terminal device in an RRC non-connected state is a cell which the terminal device camps on (Camps on), or may also be referred to as a camped serving cell.

Radio access network-based notification area (RAN-based Notification Area, RNA) update: For a terminal device entering an RRC idle state or RRC inactive state, the terminal device may be in a moving state, that is, cell reselection occurs. Therefore, to enable a network device to find the terminal device at any time, a tracking area (tracking area) is defined. The TA includes a plurality of cells, and a core network sends a paging message in the tracking area to track the terminal device.

To reduce transmission overheads, the plurality of cells in a TA range are divided into a plurality of RNAs, and one RNA may include a plurality of cells. The RNA is managed by the network device (for example, a gNB). In an embodiment, a network device in a serving cell on which the terminal device in an RRC connected state last camps is referred to as an anchor (anchor) base station or a last serving base station last serving gNB. A network device in a serving cell on which the terminal device selects to camp after the terminal device enters an RRC inactive state and performs cell reselection/cell selection is referred to as a serving base station. The serving base station and the anchor base station may be a same network device, or may be different network devices. When the anchor base station sends an RRC release message to indicate the terminal device to enter an RRC inactive state from the RRC connected state, the anchor base station indicates, in the RRC release message, information about an RNA in which the terminal device in the RRC connected state is located. For example, in a possible manner, the RRC release message carries an RNA ID. Currently, the RNA ID includes a tracking area code (Tracking Area Code) and a RAN area code (RAN Area Code). For another example, in another manner, the RRC release message carries a list of cells included in the RNA, and a cell in the list of cells may be indicated by using an identity of the cell.

After the terminal device enters the RRC inactive state or RRC idle state, when the anchor base station receives, from the core network, a downlink signal to be sent to the terminal device, for example, receives downlink signaling from an access and mobility management function (Access and Mobility Management Function, AMF) network element or receives downlink data from a user plane function (User Plane Function, UPF) network element, the anchor base station sends the paging message (RAN paging) to all the cells, in the RNA range, carried in the RRC release message. In addition, if the RNA range includes a cell of one or more neighboring network devices, the anchor base station sends RNA paging to the neighboring network device through an Xn interface between the anchor base station and the neighboring network device, so that the neighboring cell performs paging in the neighboring cell. After receiving the paging message, the terminal device in the RRC inactive state or RRC idle state triggers RRC resume or RRC setup.

Because the terminal device may move out of the RNA range configured by the anchor base station, the terminal needs to trigger RAN update in a timely manner, so that the serving base station can update the RAN in a timely manner, to avoid a case in which the terminal device cannot receive the paging message, and receiving of the downlink signal is affected. In an example, for a terminal device in an RRC inactive state, the terminal device may periodically (for example, set a first timer to indicate duration for triggering RAN update) send an RRC resume request message to a serving base station, and include, in the RRC resume request message, an RRC resume cause (Resume Cause) value as RNA update (rna-Update), to indicate the serving base station to determine whether the terminal device is still in a RAN configured by an anchor base station. The periodic RNA update timer may be started when the terminal device receives an RRC release message, and after the timer expires, the terminal device triggers an RRC resume request. The duration of the timer may be configured by the anchor base station in the RRC release message.

In another example, when performing cell reselection, a terminal device obtains, by using a synchronization signal and physical broadcast channel block (Synchronization signal and physical broadcast channel block, SSB) signal of a target cell, a physical cell identity (Physical Cell identity, PCID) of the target cell to be accessed, to determine whether the PCID of the target cell is in a list of cells included in an RNA configured by an anchor base station. Alternatively, after accessing a target cell, a terminal device obtains, by using a SIB1 (System Information Block, system information) of the target cell, an RNA ID of an RNA in which the target cell is located, to determine whether the RNA ID of the RNA in which the target cell is located is the same as an RNA ID configured by an anchor base station. If the terminal device determines that the target cell is not in an RNA range configured by the anchor base station, the terminal device sends an RRC resume request message to a serving base station, and includes, in the RRC resume request message, a cause value of rna-Update, to notify the serving base station that the terminal device is not in a RAN configured by the anchor base station.

If the serving base station is not the anchor base station, after receiving the RRC resume request message, the serving base station sends a UE context retrieval request (RETRIEVE UE CONTEXT REQUEST) message to the anchor base station, where the UE context retrieval request message carries rna-Update and an I-RNTI. The anchor base station obtains stored context information of the terminal device based on the I-RNTI, and determines whether the terminal device moves out of the RNA configured by the anchor base station. If the terminal device moves out of the RNA configured by the anchor base station, the anchor base station sends a UE context retrieval response (RETRIEVE UE CONTEXT RESPONSE) message to the serving base station, where the message includes a context of the terminal device. The serving base station sends an RRC resume message to the terminal device based on the context of the terminal device, so that the terminal device enters an RRC connected state from an RRC inactive state, and the serving base station continues to maintain context information of the terminal device. Alternatively, the serving base station may send an RRC release message to the terminal device, so that the terminal device remains in or returns to an RRC inactive state again or migrates to an RRCA idle state, and the serving base station indicates an updated RNA in the RRC release message.

If the anchor base station determines that the terminal device still stays in the RNA, the anchor base station sends a UE context retrieval failure (RETRIEVE UE CONTEXT FAILURE) message to the serving base station and does not send the context information of the terminal device, and the anchor base station still manages the context information. The UE context retrieval failure message may include an encapsulated RRC release message, and the RRC release message carries a suspendConfig information element. The serving base station forwards the RRC release message to the terminal device, and the terminal device returns to the RRC inactive state again. Specifically, if the terminal device has no service for a long time, the anchor base station may also determine to migrate the terminal device from the RRC inactive state to an RRCA idle state. To be specific, the anchor base station includes an encapsulated RRC release message (excluding suspendConfig) in a UE context retrieval failure message, and after the gNB forwards the RRC release message to the UE, the UE enters the RRC idle state.

Multicast broadcast service (Multicast Broadcast Service, MBS): A broadcast communication service is a communication service of providing a same service and same specific content data to all terminal devices in a broadcast coverage area. In other words, all terminal devices in a broadcast coverage area can receive same data. In an NR MBS, a broadcast can be received in an RRC idle state, an RRC inactive state, and an RRC connected state. The broadcast is in a point-to-multipoint (Point-to-Multipoint, PTM) transmission manner. That is, a network device may send downlink data (or referred to as an MBS data packet) of a broadcast session to a plurality of terminal devices through an air interface. The terminal device may descramble a received multicast by using a common RNTI (G-RNTI). The terminal device may obtain a configuration of a broadcast MBS control channel (MBS control channel, MCCH) from system information (for example, a SIB20) of the serving cell, receive a second MCCH message based on a configuration of a second MCCH, and determine, based on an indication of the second MCCH message, the broadcast session that can be provided by the serving cell and a configuration of each broadcast session. For example, the configuration information of the broadcast session may include a temporary mobile group identity (Temporary Mobile Group Identity, TMGI) of the broadcast session, a G-RNTI used to descramble a broadcast MTCH, a broadcast MRB configuration, scheduling information (for example, a DRX configuration) of the broadcast MTCH, a list of neighboring cells that provide the broadcast session, and the like.

NR MBS multicast: An NR MBS multicast may be referred to as an MBS multicast service, an MBS multicast session, a multicast service, a multicast session, a multicast, or the like in embodiments of this application. A typical MBS multicast may include a public safety service (for example, earthquake emergency communication and firefighter communication), a sports program, concert broadcasting, or the like. The MBS multicast may be in a PTP transmission manner or a PTM transmission manner. A terminal device may perform an authentication procedure with a core network, to apply for joining the MBS multicast. Then, a network device sends multicast configuration information to the terminal device by using dedicated signaling, where the information includes an identifier (for example, a TMGI) of the multicast session that the terminal device requests to receive, a configuration (including one or more of a PDCP configuration, an RLC configuration, a MAC configuration, and a physical layer configuration) of an MRB of the multicast, a G-RNTI used to descramble a multicast MTCH, scheduling information of the multicast MTCH, and the like.

In Rel-17, the MBS multicast supports only transmission in an RRC connected state. The terminal device may receive the multicast session in a serving cell, where the serving cell may be a primary cell (PCell) or a secondary cell (SCell). However, when a quantity of users participating in a multicast in a cell is excessively large, the quantity may exceed a quantity of users in an RRC connected state that can be accommodated in the cell. Therefore, to relieve network congestion, Rel-18 supports a terminal device joining a multicast receives a multicast in an RRC inactive state. The terminal device in the RRC inactive state may receive the multicast in a PTM manner, and multicast configuration information provided by a network device may also be referred to as PTM configuration information. The PTM configuration information may include one or more of the following: an identifier (for example, a TMGI) of the multicast that the terminal device requests to receive, a configuration (including one or more of a PDCP configuration, an RLC configuration, a MAC configuration, and a physical layer configuration) of an MRB of the multicast, a G-RNTI used to descramble a multicast MTCH, scheduling information of the multicast MTCH, and the like.

Currently, the network device provides, for the RRC inactive state, two configuration manners for the multicast configuration information. One is that the network device includes the multicast configuration information in an RRC release message and sends the RRC release message to the terminal device when sending the RRC release message to the terminal device. The other is that the network device sends the multicast configuration information by using a first MCCH message. For example, when sending an RRC release message to the terminal device, the network device includes, in the RRC release message, a configuration of a first MCCH of a cell, so that the terminal device receives the first MCCH message based on the configuration of the first MCCH after entering the RRC inactive state. Alternatively, the network device may configure a first MCCH in system information (for example, a SIB1). After receiving the system information, the terminal device in the RRC inactive state obtains a configuration of the first MCCH from the system information, receives the first MCCH message based on the configuration of the first MCCH, and obtains, from the first MCCH message, the multicast configuration information of the multicast that the terminal device requests to receive. The configuration information of the first MCCH includes at least one of the following: a repetition periodicity and an offset of the first MCCH, a window start position of the first MCCH, window duration of the first MCCH, and a modification periodicity of the first MCCH.

It should be noted that, for a same multicast, multicast configuration information configured by the network device for an RRC inactive state may be the same as or different from multicast configuration information configured by the network device for an RRC connected state.

After performing cell reselection/cell selection, in the camped serving cell, the terminal device in the RRC inactive state may obtain, from the first MCCH message in the serving cell, the multicast configuration information of the multicast (which is assumed to be a first multicast) that the terminal device requests to receive in the serving cell. If the terminal device cannot obtain the first MCCH message in the serving cell, or the first MCCH message does not include the multicast configuration information of the first multicast, the terminal device needs to request, from the network device managing the serving cell, to resume an RRC connection, to enter an RRC connected state to obtain the multicast. In a possible scenario, the serving cell does not provide the first multicast for the terminal device in the RRC inactive state, but provides the first multicast for the terminal device in the RRC connected state. In this case, the terminal device can receive the first multicast after entering the RRC connected state. In another possible scenario, if the serving cell does not support providing the first multicast, after entering the RRC connected state, the terminal device may request the network device to provide the first multicast.

In a possible scenario, the terminal device in the RRC inactive state may perform cell reselection for a plurality of times in a moving process. After each reselection, if a camped serving cell can provide the first multicast, the terminal device obtains the multicast configuration information of the first multicast based on a first MCCH message in the serving cell. Multicast configuration information provided by serving cells may include configuration information of different MRBs. The terminal device may receive first multicasts in the different serving cells based on different MRBs. Then, after the terminal device in the RRC inactive state performs cell reselection again, if the terminal device cannot obtain, in a selected serving cell, multicast configuration information used to receive the first multicast in the RRC inactive state, the terminal device needs to request a serving base station that manages the serving cell to resume an RRC connection. The serving base station sends a context retrieval request to an anchor base station of the terminal device, to obtain context information of the terminal device. The context information includes multicast configuration information configured by the anchor base station for the terminal device in the RRC connected state. The serving base station determines, based on the multicast configuration information, a configuration of an MRB used to transmit the first multicast. For example, for a same MRB, the configuration of the MRB used in the connected state is provided in an RRC resume message in a delta configuration (or delta configuration) manner. However, compared with a configuration of an MRB used to receive the first multicast in the RRC connected state, the configuration of the MRB may be modified after the terminal device receives the multicast in the RRC inactive state. Further, a multicast is received in the inactive state based on a modified configuration of the MRB. In addition, after the terminal device performs cell reselection, a cell obtained after reselection may also modify the configuration of the MRB. In this case, when an RRC connection is resumed, if the terminal device restores the MRB based on the currently used configuration of the MRB and a delta configuration provided by the serving base station in the RRC resume message, the terminal device cannot align the configuration of the MRB with the serving base station. As a result, the configuration of the MRB used by the terminal device is different from the configuration of the MRB used by the network device, and the UE cannot correctly receive the first multicast.

In view of this, embodiments of this application provide a communication method. A terminal device stores first multicast configuration information in context information, and determines, based on the first multicast configuration information after resuming an RRC connection, a first MRB used for transmission of a first multicast.

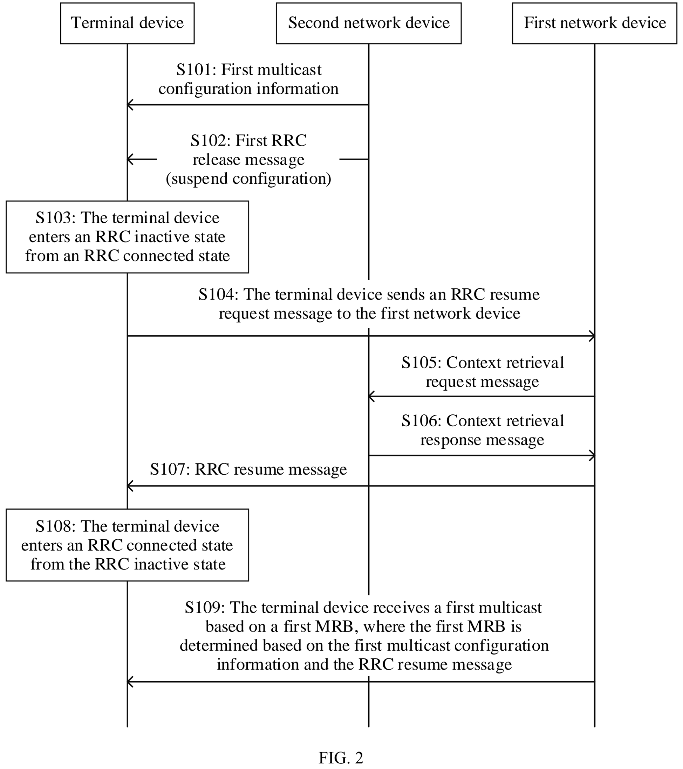

The following describes an example of the communication method provided in this application with reference to FIG. 2.

FIG. 2 is a schematic flowchart of a communication method according to an embodiment of this application. The method includes the following steps.

S101: A second network device sends first multicast configuration information to a terminal device.

For example, the first multicast configuration information is carried in an RRC reconfiguration (RRC Reconfiguration) message. The first multicast configuration information is configuration information for receiving a first multicast in an RRC connected state. The first multicast configuration information may include a configuration of a multicast MRB. For example, the first multicast configuration information may include an identifier of at least one multicast MRB, and the first multicast configuration information further includes at least one of a PDCP configuration, an RLC configuration, a MAC configuration, and a physical layer configuration of each MRB. It may be understood that when being in the RRC connected state, the terminal device may receive the first multicast based on the at least one MRB. The first multicast is a multicast that the terminal device has joined. For example, the first multicast configuration information includes configuration information of a multicast MRB-1.

In this application, the first multicast may also be replaced with a first MBS multicast, a first multicast session, or a first multicast service.

After receiving the first multicast configuration information, the terminal device stores the first multicast configuration information locally.

S102: The second network device sends a first RRC release message to the terminal device, where the first RRC release message carries a suspend configuration (suspendConfig).

The first RRC release message further indicates the terminal device to receive multicast configuration information in an RRC inactive state.

S103: The terminal device enters the RRC inactive state from the RRC connected state.

After entering the RRC inactive state, the terminal device performs cell selection and/or cell reselection. In an example, as the terminal device moves, the terminal device may perform cell reselection for a plurality of times.

For example, after entering the RRC inactive state from the RRC connected state, the terminal device continues to receive the first multicast by using the multicast MRB-1 based on second multicast configuration information indicated in the RRC release message.

For another example, after the terminal device performs cell reselection, a serving cell (assumed to be a cell 2) on which the terminal device selects to camp may still be a cell managed by the second network device. The terminal device may receive second multicast configuration information sent by the second network device, and receive the first multicast in the cell 2 based on the second multicast configuration information. The second multicast configuration information may be carried in system information and/or a multicast MCCH message broadcast in the cell 2.

The second multicast configuration information is configuration information for receiving the first multicast in the RRC inactive state. For example, the second multicast configuration information may include an identifier of at least one MRB, and the second multicast configuration information further includes at least one of a PDCP configuration, an RLC configuration, a MAC configuration, and a physical layer configuration of each MRB. The second multicast configuration information may be from the second network device, or may be from a network device corresponding to a serving cell on which another terminal device camps. It should be noted that in this application it is not limited to providing same multicast configurations in serving cells on which the terminal device camps in the RRC inactive state. In other words, the second multicast configuration information received by the terminal device in the cell 2 may be different from second multicast configuration information received by the terminal device after the cell 2 is reselected to the cell 3. In this application, the second multicast configuration information only represents multicast configuration information used by the terminal device to receive a multicast in the RRC inactive state.

In an example, both the second multicast configuration information and the first multicast configuration information may include configuration information of a first MRB. In other words, for the RRC inactive state and the RRC connected state, the second network device configures at least one same first MRB to transmit the first multicast, and the terminal device may receive the first multicast based on the first MRB in both the RRC inactive state and the RRC connected state.

Optionally, after the terminal device performs cell reselection, a serving cell (assumed to be a cell 3) on which the terminal device selects to camp may be a cell managed by a third network device. The terminal device in the RRC inactive state may obtain second multicast configuration information from first system information of the cell 3 and/or a first MCCH message of the cell 3, and receive the first multicast in the cell 3 based on the second multicast configuration information.

Optionally, after the terminal device performs cell reselection, a serving cell (assumed to be a cell 1) on which the terminal device selects to camp may further be a cell managed by a first network device.

It may be understood that after entering the RRC inactive state, through cell reselection, the terminal device may directly camp on the cell 1, or may camp on the cell 2 and/or the cell 3 first, and then camp on the cell 1.

S104: The terminal device sends an RRC resume request message to the first network device.

In an example, the terminal device needs to receive the first multicast in the RRC inactive state, but the second multicast configuration information is not sent in the cell 1. In this case, the terminal device may send the RRC resume request message to the first network device, to request to resume an RRC connection.

That the second multicast configuration information is not sent in the cell 1 may be understood as: First system information is not sent in the cell 1, where the first system information is used to configure a first MCCH, and the first MCCH is a multicast MCCH; or an SIB1 sent in the cell 1 does not include scheduling information of first system information; or a first MCCH message sent in the cell 1 does not include the second multicast configuration information.

In another example, when the terminal device can receive the second multicast configuration information in the cell 1 and can receive, in the RRC inactive state based on the second multicast configuration information, the first multicast sent in the cell 1, the terminal device may send the RRC resume request message to the first network device when the terminal device has a data transmission requirement, to request to resume the RRC connection.

For example, the terminal device receives a paging message sent by the first network device, and determines, based on the paging message, that the RRC connection needs to be resumed, to receive downlink data or downlink control signaling. For another example, the terminal device needs to resume the RRC connection, to send uplink data to the first network device.

Optionally, the terminal device may also send the RRC resume request message to the first network device after determining that the cell 1 does not belong to an RNA range configured by the second network device, to request to resume the RRC connection.

S105: The first network device sends a context retrieval request message to the second network device.

S106: The second network device sends a context retrieval response message to the first network device.

After receiving the context retrieval request message, the second network device sends the context retrieval response message to the first network device, where the message carries context information of the terminal device. The context information includes the first multicast configuration information.

S107: The first network device sends an RRC resume message to the terminal device.

The RRC resume message includes third multicast configuration information.

If the first network device can provide the first multicast, and configures the third multicast configuration information for the first multicast, where the third multicast configuration information includes configuration information of the at least one MRB, the first network device may provide, in a delta (delta) configuration manner, the third multicast configuration information for the multicast MRB configured in a first multicast configuration. It is assumed that the first multicast configuration information and the third multicast configuration information both include the configuration information of the first MRB, the first network device may provide a delta configuration for the first MRB in the RRC resume message. This can avoid repeated carrying of same configurations, and reduce signaling overheads. Correspondingly, after receiving the third multicast configuration information, the terminal device restores the first MRB based on the third multicast configuration information and the configuration information of the first MRB in the first multicast configuration.

S108: The terminal device enters an RRC connected state from the RRC inactive state.

S109: The terminal device receives the first multicast based on the first MRB, where the first MRB is determined based on the first multicast configuration information and the RRC resume message.

Correspondingly, after entering the RRC connected state, the terminal device may receive the first multicast based on the first MRB restored based on the third multicast configuration information carried in the RRC resume message and the pre-stored first multicast configuration information. In this way, configuration information of the MRB of the first network device is same as configuration information of the MRB determined by the terminal device, and the terminal device can correctly receive, based on the first MRB, the first multicast sent by the first network device.

Optionally, if the third multicast configuration information further includes configuration information of a second MRB, but the first multicast configuration information does not include the configuration information of the second MRB, the terminal device may also create the second MRB, so that the first network device and the terminal device can perform receiving of the first multicast based on the first MRB and the second MRB.

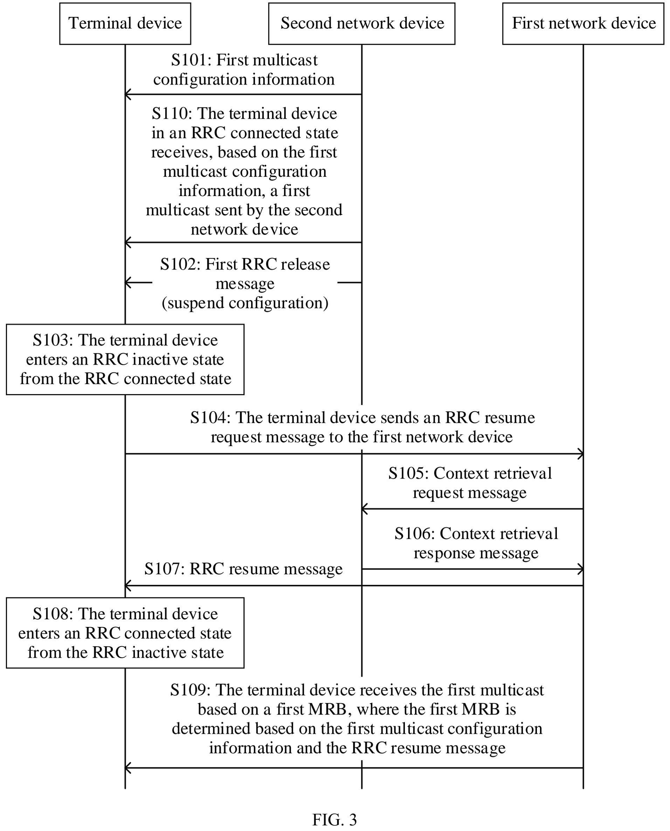

In a possible scenario, as shown in FIG. 3 based on FIG. 2, before S102, that is, before the second network device releases an RRC connection to the terminal device, the method further includes the following step.

S110: The terminal device in the RRC connected state receives, based on the first multicast configuration information, the first multicast sent by the second network device.

In a possible scenario, if an anchor base station supports receiving of a multicast by the terminal device in a non-connected state, the anchor base station adds multicast configuration information to an RRC release message, for the terminal device to receive the corresponding multicast in the RRC non-connected state. However, if only multicast configuration information of a primary serving cell PCell of the terminal device in the RRC connected state can be sent in the RRC release message, this limits flexibility of providing a multicast configuration in the non-connected state by the anchor base station by using dedicated signaling. In addition, when selecting and camping on another cell after entering the RRC non-connected state, the terminal device needs to obtain system information and a multicast MCCH message in the cell to obtain the multicast configuration, and then starts to receive a multicast service, and this causes multicast receiving interruption, and affects continuity of receiving a multicast service by the terminal device. In a possible scenario, the terminal device receives a multicast service in a secondary serving cell SCell in the RRC connected state. After entering the RRC non-connected state, the terminal device may perform reselection and camp on the cell again to receive a multicast. In this case, the terminal device re-obtains a multicast configuration, and this causes multicast receiving interruption.

In addition, currently, it is difficult for the terminal device to determine which cell the multicast configuration information carried in the RRC release message is configured for by the anchor base station. Therefore, after completing cell selection, the terminal device needs to re-obtain a first MCCH message of a camped serving cell to obtain multicast configuration information corresponding to the serving cell. This is not conducive to multicast receiving continuity, and increases power consumption overheads of the terminal device.

For this problem, this application further provides another communication method, so that a terminal device can determine second multicast configuration information sent by a second network device in a first RRC release message and used to receive a first multicast in an RRC non-connected state in a first cell. The first cell may be a primary serving cell or a serving cell of the terminal device in an RRC connected state. In this way, after performing cell selection and camping on the first cell, the terminal device can directly receive the first multicast by using the second multicast configuration information in the first RRC release message, without re-obtaining the second multicast configuration information. On one hand, multicast receiving interruption caused by re-obtaining a multicast configuration is reduced, multicast receiving continuity is improved, and power consumption overheads of the terminal device are reduced. On the other hand, flexibility of providing, by a network device, a multicast configuration for the non-connected state is improved, and the network device can select a multicast configuration of a specific cell to be provided.

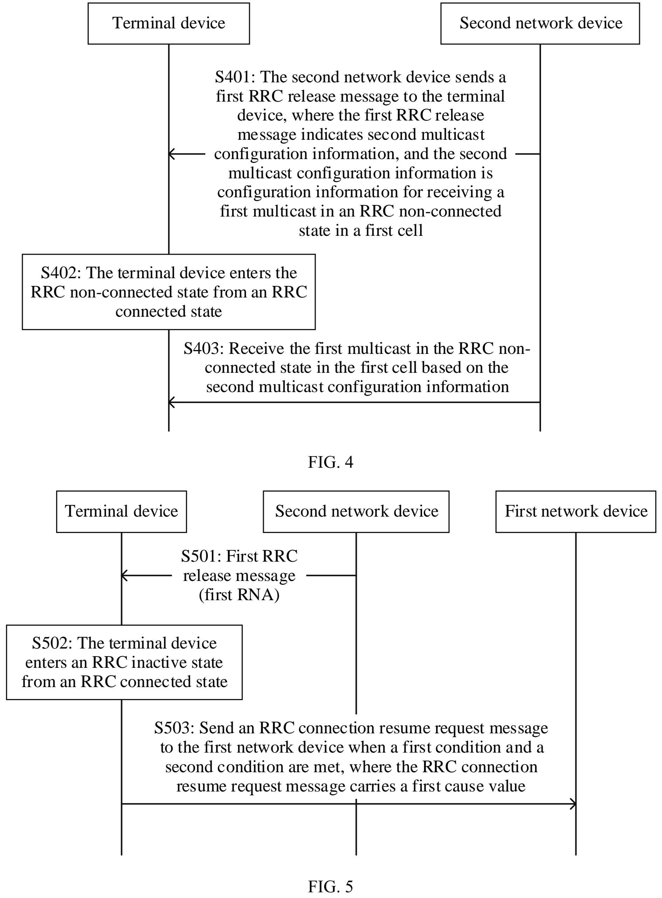

For example, FIG. 4 is a schematic flowchart of another communication method according to an embodiment of this application. The method includes the following steps.

S401: A second network device sends a first RRC release message to a terminal device, where the first RRC release message indicates second multicast configuration information, and the second multicast configuration information is configuration information for receiving a first multicast in an RRC non-connected state in a first cell.

In this embodiment of this application, the RRC non-connected state includes an RRC inactive state or RRC idle state. The first cell may be a primary serving cell (PCell) or a secondary serving cell (SCell).

In an example, if the terminal device has started to receive the first multicast when the terminal device is in an RRC connected state, when releasing an RRC connection to the terminal device, the second network device may send, for the serving cell on which the terminal device receives the first multicast when the terminal device is in the RRC connected state, the second multicast configuration information for receiving the multicast in the RRC non-connected state on the serving cell, and send the second multicast configuration information to the terminal device in the first RRC release message.

Correspondingly, when receiving the first RRC release message, the terminal device may learn of the second multicast configuration information carried in the first RRC release message, where the second multicast configuration information is the configuration information for receiving the first multicast in the RRC non-connected state in the first cell. The first cell may be the serving cell on which the terminal device receives the first multicast when the terminal device is in the RRC connected state, or the first cell is a serving cell configured with a first common frequency domain resource (common frequency resource, CFR), and the first common frequency domain resource is used to perform transmission on the first multicast in the RRC connected state. In this example, the terminal device may determine the first cell based on the cell in which the terminal device receives the multicast service in the connected state, or it may be understood that the second network device implicitly indicates the first cell to the terminal device.

In this example, the second network device may continue to provide the multicast for the RRC non-connected state in the service cell in which the multicast is provided for the RRC connected state, and may use a same time domain/frequency domain resource for the same multicast for the RRC connected state and the RRC non-connected state. This reduces overheads of air interface resources and improves resource utilization efficiency.

Optionally, the first RRC release message includes an identifier of the first cell. In other words, the first RRC release message sent by the second network device explicitly indicates an identifier of the first cell, and indicates that the second multicast configuration information indicated in the first RRC release message is configured by the second network device for the first cell. Correspondingly, the terminal device may directly determine, based on the identifier of the first cell, a cell to which the second multicast configuration information is applicable.

In an example, the first RRC release message may indicate one piece of second multicast configuration information, or may indicate a plurality of pieces of second multicast configuration information. When the first RRC release message indicates the plurality of pieces of second multicast configuration information, each piece of second multicast configuration information corresponds to a corresponding first cell, that is, the first RRC release message may indicate a plurality of first cells, and each first cell has a one-to-one correspondence with second multicast configuration information. Each piece of second multicast configuration information is configuration information for receiving the first multicast in the RRC non-connected state in a first cell corresponding to the second multicast configuration information.

In an example, the second multicast configuration information includes at least one of an identifier of the first multicast, an activation status of the first multicast, a first MCCH configuration, and a PTM configuration of the first multicast.

It should be noted that the first MCCH configuration is configured by the second network device for the first cell, and the first cell may provide a plurality of multicasts, and first MCCH configurations of the plurality of multicasts are the same. The multicast identifier, the activation status, and the PTM configuration are configured by the second network device for each multicast provided for each cell.

S402: The terminal device enters the RRC non-connected state from the RRC connected state.

It may be understood that if the first RRC release message carries a suspend configuration, the terminal device releases the RRC connected state to the RRC inactive state. If the first RRC release message does not carry a suspend configuration, the terminal device releases the RRC connected state to the RRC idle state.

The terminal device enters the RRC non-connected state, and performs cell selection. Optionally, in a cell selection process, the terminal device may preferentially determine whether the first cell meets an S criterion, that is, determine whether a receive power value of the first cell is greater than a first preset threshold and whether signal quality of the first cell is greater than a second preset threshold. If the first cell meets the S criterion, the terminal device may preferentially select the first cell as the serving cell on which the terminal device camps in the RRC non-connected state.

In an example, if the terminal device performs cell selection and camps on the first cell, the method may further include the following step after S402.

S403: Receive the first multicast in the RRC non-connected state in the first cell based on the second multicast configuration information.

In this example, the terminal device preferentially camps on the first cell. On one hand, the terminal device can directly receive the first multicast by using the second multicast configuration information indicated by the second network device in the first RRC release message, without re-obtaining the second multicast configuration information by obtaining the first MCCH message of the first cell. This reduces power consumption of the terminal device. In addition, because time for re-obtaining the second multicast configuration information is saved, multicast receiving interruption caused by RRC state transition is reduced to some extent, and multicast receiving efficiency and continuity are improved.

On the other hand, the second network device can flexibly provide, by using dedicated signaling (for example, an RRC release message), a multicast configuration and a corresponding cell for the non-connected state. For example, the second network device may provide a multicast service in a same cell in the RRC non-connected state and the RRC connected state by using a same configuration. In this way, resource utilization efficiency can be improved.

In a possible scenario, a terminal device in an RRC inactive state sends an RRC resume request message to a first network device when trigger conditions are met, to request to resume an RRC connection. The RRC resume request message carries a resume cause value corresponding to the trigger conditions, to indicate the network device to perform a corresponding operation. However, the current resume cause value cannot fully indicate a status of the terminal device, and therefore the network device cannot meet a data transmission performance requirement of the terminal device.

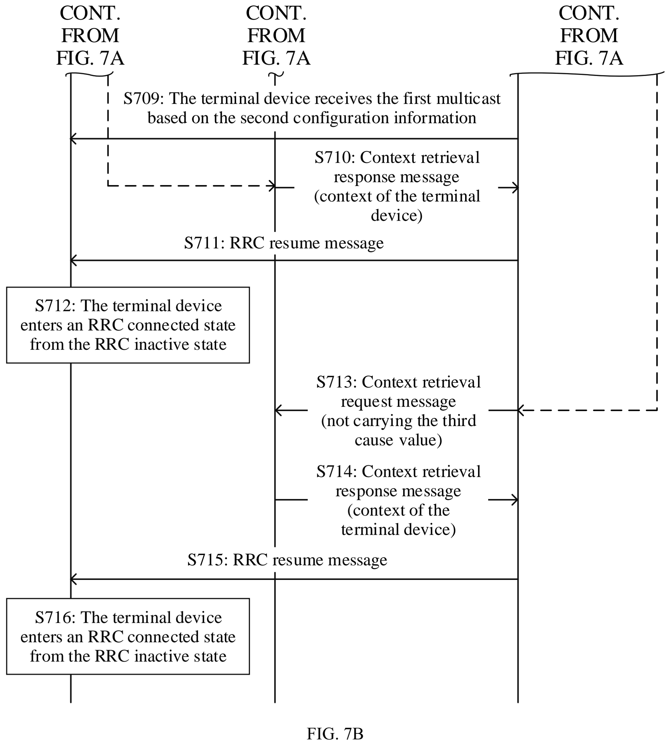

Therefore, this application further provides another communication method, to fully reflect a status of a terminal device, and improve resource transmission efficiency of the terminal device. The following uses embodiments shown in FIG. 5 to FIG. 7A and FIG. 7B as examples to describe the communication method provided in this application.

FIG. 5 is a schematic flowchart of another communication method according to an embodiment of this application. The method includes the following steps.

S501: A second network device sends a first RRC release message to a terminal device, where the first RRC release message indicates a first RNA.

The first RNA may be indicated by an RNA identifier (RNA ID), or may be indicated by an identity of a cell included in the first RNA. The cell included in the first RNA is a cell forming the first RNA.

The first RNA is an RNA in which the terminal device is located when the terminal device receives the first RRC release message.

The first RRC release message includes a suspend configuration (suspendConfig).

S502: The terminal device enters an RRC inactive state (RRC Inactive state) from an RRC connected state.

S503: Send an RRC connection resume request message to a first network device when a first condition and a second condition are met, where the RRC connection resume request message carries a first cause value.

The first network device is a network device in a serving cell, and the serving cell is a cell on which the terminal device in the RRC inactive state camps.

The first condition is that a first timer expires or the serving cell does not belong to the first RNA. The first timer is a timer indicating a RAN update periodicity (for example, the first timer is T380). The first timer may be started when the terminal device receives the first RRC release message, and duration of the first timer is configured in the first RRC release message. When the first timer expires, the terminal device may need to update the RAN. Specifically, that the serving cell does not belong to the first RNA may be determined based on an SIB1 of the serving cell. Specifically, the terminal device receives the SIB1 of the serving cell, and when an RNA identifier of the serving cell indicated in the SIB1 of the serving cell is different from the RNA (first RNA) identifier of the terminal device, the terminal device determines that the serving cell does not belong to the first RNA. Alternatively, that the serving cell does not belong to the first RNA may be determined based on the identity of the serving cell. Specifically, when the first RRC release message indicates the serving cell forming the first RNA, if the terminal device determines that a camped serving cell does not belong to the serving cell in the first RNA, the terminal device determines that the serving cell does not belong to the first RNA.

The second condition is that a multicast is not received in the RRC inactive state, or a multicast is received in the RRC inactive state and second multicast configuration information is sent in the serving cell. That the multicast is not received in the RRC inactive state herein may be understood as: That receiving the multicast in the RRC inactive state is not configured in the first RRC release message, that is, the terminal device does not need to receive the multicast in the RRC inactive state.

That the multicast is received in the RRC inactive state and the second multicast configuration information is sent in the serving cell herein may be understood as: That receiving the multicast in the RRC inactive state is configured in the first RRC release message and the terminal device can receive the second multicast configuration information sent in the serving cell, that is, the terminal device needs to receive the multicast in the RRC inactive state and the terminal device in the RRC inactive state can also obtain a status of a multicast configuration of the serving cell.

The second multicast configuration information is configuration information for receiving a first multicast in the RRC inactive state in the serving cell. The second multicast configuration information includes at least one of an identifier of the first multicast, a G-RNTI of the first multicast, and an MRB configuration of the first multicast.

The first multicast is a multicast that the terminal device applies for joining and that is in an active state.

The second multicast configuration information may be carried in a first MCCH message and sent to the terminal device in the serving cell. The first MCCH message is an MCCH message for the multicast configuration.

In an example, the first cause value may be a newly set resume cause value and indicates that the terminal device may need to perform RNA update but does not need to obtain the multicast configuration.

Optionally, the first cause value is RNA update. In this example, the conditions of using "RNA update" as the resume cause value are reset. Only when the first condition and the second condition are met, the terminal device uses "RNA update" as the resume cause value, to request the first network device to resume an RRC connection. This avoids a case in which the terminal device cannot successfully receive a multicast because the first network device still releases the terminal device to an RRC non-connected state based on the cause value of RNA update and does not provide a multicast configuration in the RRC inactive state for the terminal device when the terminal device updates an RNA and needs to obtain the multicast configuration.

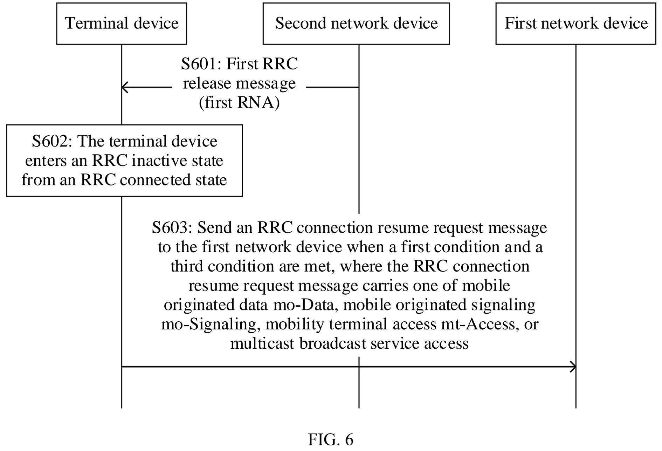

FIG. 6 is a schematic flowchart of another communication method according to an embodiment of this application. The method includes the following steps.

S601: A second network device sends a first RRC release message to a terminal device, where the first RRC release message indicates a first RNA.

S602: The terminal device enters an RRC inactive state from an RRC connected state.

S603: Send an RRC connection resume request message to a first network device when a first condition and a third condition are met, where the RRC connection resume request message carries a second cause value, and the second cause value is one of mobile originated data mo-Data, mobile originated signaling mo-Signaling, mobility terminal access mt-Access, or multicast broadcast service access.

The first condition is that a first timer expires or a serving cell does not belong to the first RNA.

The third condition is that the first RRC release message indicates to receive a multicast in the RRC inactive state and second multicast configuration information is not sent in the serving cell, and the second multicast configuration information is configuration information for receiving a first multicast in the RRC inactive state in the serving cell.

That the second multicast configuration information is not sent in the serving cell may be that a first MCCH message sent in the serving cell does not include the second multicast configuration information. It may be understood that the first MCCH message is an MCCH message used to configure the multicast. The first MCCH message in the serving cell may include multicast configuration information of one or more multicasts that can be currently provided by the serving cell, but does not include the second multicast configuration information. That is, the first MCCH message indicates that the serving cell may not provide the first multicast, or the serving cell does not provide transmission of the first multicast for the RRC inactive state.

Alternatively, that the second multicast configuration information is not sent in the serving cell may be that first system information is not sent in the serving cell, where the first system information is used to send configuration information of a first MCCH. The configuration information of the first MCCH is used by the terminal device to receive the first MCCH message. For example, the configuration information of the first MCCH includes at least one of the following: a repetition periodicity and an offset of the first MCCH, a window start position of the first MCCH, window duration of the first MCCH, and a modification periodicity of the first MCCH.

Alternatively, that the second multicast configuration is not sent in the serving cell may be that system information SIB1 of the serving cell does not include scheduling information of first system information, where the first system information is used to send configuration information of a first MCCH.

An MBS access indication indicates an MBS-related access type. The MBS access indication may be understood as an MBS resume indication or a multicast resume indication. The MBS access indication indicates that the terminal device cannot receive a multicast in the RRC inactive state; or the terminal device cannot receive multicast configuration information in the RRC inactive state; or the terminal device requests to enter an RRC connected state to receive a multicast.

According to the communication method provided in this embodiment of this application, when the terminal device updates an RNA and needs to re-obtain a multicast configuration, one of the mobile originated data mo-Data, the mobile originated signaling mo-Signaling, the mobility terminal access mt-Access, or the multicast broadcast service access is used as a resume cause value, to ensure that the first network device can obtain a context of the terminal device from the second network device (last serving gNB) based on the RRC resume request message of the terminal device, so that the terminal device enters the RRC connected state; and provide the multicast for the terminal device; or provide the multicast configuration for the terminal device in the RRC inactive state, and provide the multicast for the terminal device in the inactive state. This ensures that the terminal device can successfully receive the multicast and improve multicast receiving efficiency.

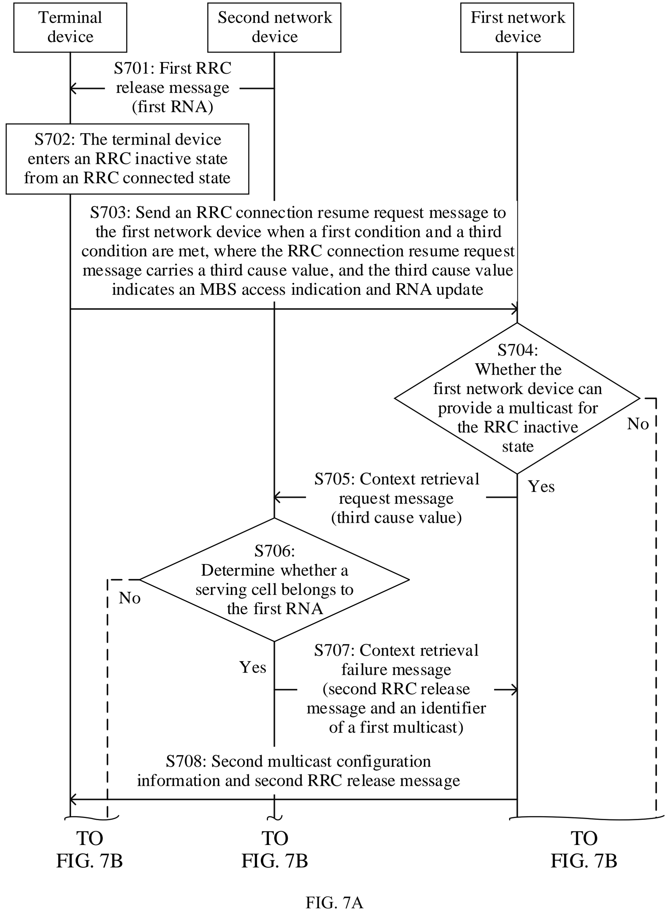

FIG. 7A and FIG. 7B are a schematic flowchart of another communication method according to an embodiment of this application. The method includes the following steps.

S701: A second network device sends a first RRC release message to a terminal device, where the first RRC release message indicates a first RNA.

S702: The terminal device enters an RRC inactive state from an RRC connected state.

S703: Send an RRC connection resume request message to a first network device when a first condition and a third condition are met, where the RRC connection resume request message carries a second cause value, the second cause value is a third cause value, and the third cause value indicates an MBS access indication and RNA update.

For specific descriptions of the first condition and the third condition, refer to the descriptions in S603. Details are not described herein again.

S704: The first network device determines whether the first network device can provide a multicast for the RRC inactive state.

After receiving the RRC connection resume request message, the first network device first determines whether the first network device can provide the multicast for the RRC inactive state. If the first network device can provide the multicast for the RRC inactive state, the first network device proceeds to step S705 for further execution. If the first network device cannot provide the multicast for the RRC inactive state, the first network device proceeds to step S713 for further execution.

S705: The first network device sends a context retrieval request message to the second network device, where the context retrieval request message carries the third cause value.

Optionally, the context retrieval request message may further carry a set of an identifier of a multicast for the RRC inactive state that can be provided by the first network device. The set of the identifier of the multicast may include an identifier of a first multicast or may not include an identifier of a first multicast.

S706: The second network device determines whether a serving cell belongs to the first RNA.

After receiving the context retrieval request message, the second network device may first determine, based on the third cause value, whether the serving cell belongs to the first RNA. If the serving cell belongs to the first RNA, the second network device proceeds to step S707 for further execution. If the serving cell does not belong to the first RNA, the second network device proceeds to step S710 for further execution.

S707: The second network device sends a context retrieval failure message to the first network device, where the context retrieval failure message carries second RRC release message and the identifier of the first multicast.

When the serving cell belongs to the first RNA, the terminal device may continue to remain in the RRC inactive state. Therefore, the second network device sends the second RRC release message and the identifier of the first multicast to the first network device, to indicate the first network device to maintain the RRC inactive state of the terminal device and provide multicast configuration information of the first multicast for the terminal device.

In an example, if the context retrieval request message carries the set of the identifier of the multicast for the RRC inactive state that can be provided by the first network device, the second network device may also first determine, based on the set, whether the second network device can provide the first multicast for the RRC inactive state. If the set includes the identifier of the first multicast and the serving cell belongs to the first RNA, the second network device performs S707.

If the set does not include the identifier of the first multicast, in a possible case, the first network device has not started to provide the first multicast currently. Therefore, the second network device may also send the identifier of the first multicast to the first network device by performing S707, so that the first network device starts to provide the first multicast. In another possible case, the first network device cannot provide the first multicast for the RRC inactive state. In this example, the second network device may also send a context retrieval response message to the first network device, so that the first network device resumes an RRC connection to the terminal device, and the terminal device receives the first multicast in an RRC connected state.

S708: The first network device sends the second multicast configuration information and a second RRC release message to the terminal device.

The first network device may obtain the second multicast configuration information based on the identifier of the first multicast.

For example, if the multicast for the RRC inactive state that can be provided by the first network device includes the first multicast, the first network device may directly determine the preconfigured second multicast configuration information based on the identifier of the first multicast. If the multicast for the RRC inactive state that can be provided by the first network device does not include the first multicast, in a possible case, the first network device has not started to provide the first multicast. Therefore, when receiving the identifier of the first multicast, the terminal device may configure the second multicast configuration information, and start to provide the first multicast.

In another possible case, the first network device can provide the first multicast for the RRC connected state, but cannot provide the first multicast for the RRC inactive state. In this case, when receiving the identifier of the first multicast, the first network device may send an RRC resume message to the terminal device, so that the terminal device enters the RRC connected state from the RRC inactive state, and receives the first multicast in the RRC connected state.

In this embodiment of this application, the second multicast configuration information may be carried in the second RRC release message and sent to the terminal device. Alternatively, the second multicast configuration information may be carried in first system information and/or first MCCH message in the serving cell.

S709: The terminal device receives the first multicast based on the second configuration information.

S710: The second network sends the context retrieval response message to the first network device, where the context retrieval response message includes a context of the terminal device.

S711: The first network device sends the RRC resume message to the terminal device based on the context of the terminal device.

S712: Enter the RRC connected state from the RRC inactive state.

After entering the RRC connected state, the terminal device may request to receive the first multicast from the first network device. After obtaining the multicast configuration information sent by the first network device, the terminal device receives, in the RRC connected state based on the multicast configuration information, the first multicast sent by the first network device.

S713: The first network device sends a context retrieval request message to the second network device, where the context retrieval request message does not carry the third cause value.

S714: The second network sends a context retrieval response message to the first network device, where the context retrieval response message includes a context of the terminal device.

After the second network receives the context retrieval request message, the second network device may consider, by default because the context retrieval request message does not carry the resume cause value, that an RRC connection needs to be resumed between the first network device and the terminal device. Therefore, the second network device can directly send the context of the terminal device to the first network device in the context retrieval response message, so that the first network device maintains the context of the terminal device.

S715: The first network device sends an RRC resume message to the terminal device based on the context of the terminal device.

S716: The terminal device enters the RRC connected state from the RRC inactive state.

According to the communication method provided in this embodiment of this application, when the terminal device updates the RNA and needs to re-obtain the multicast configuration, the third cause value is set as a resume cause value, to ensure that the first network device can obtain the context of the terminal device from the second network device (last serving gNB) based on the RRC resume request message of the terminal device, so that the terminal device enters the RRC connected state; and provide a multicast for the terminal device; or provide the multicast configuration for the terminal device in the RRC inactive state, and provide a multicast for the terminal device in the inactive state. This ensures that the terminal device can successfully receive the multicast and improve multicast receiving efficiency.

Embodiments of this application may be used independently, or may be used in combination. Different steps in embodiments may also be used independently or in combination. Steps similar to those in different embodiments may be mutually referenced and referred to.

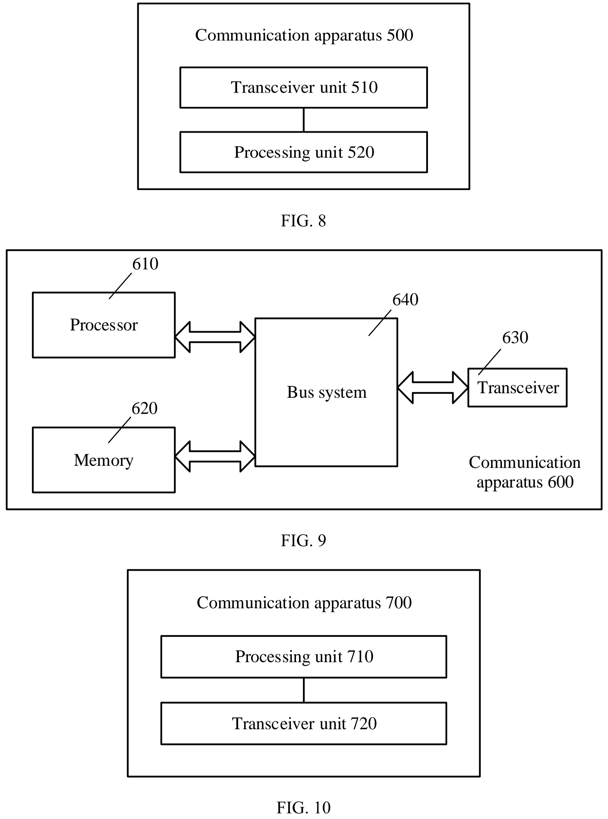

The foregoing describes in detail the signal transmission method in embodiments of this application with reference to FIG. 1 to FIG. 7A and FIG. 7B. The following describes in detail communication apparatuses in embodiments of this application with reference to FIG. 8 to FIG. 13.

In embodiments, division into functional modules may be performed on a terminal device and a network device according to the foregoing methods. For example, each functional module may be obtained through division based on each corresponding function, or two or more functions may be integrated into one processing module. The integrated module may be implemented in a form of hardware. It should be noted that division into the modules in embodiments is an example and is merely logical function division. In practice, there may be another division manner.

It should be noted that related content of the steps in the foregoing method embodiments may be referenced to function descriptions of corresponding function modules, and details are not described herein again.

The terminal device and the network device provided in embodiments of this application are configured to perform any communication method provided in the foregoing method embodiments, and therefore can achieve same effect as the foregoing implementation method. When an integrated unit is used, the terminal device or the network device may include a processing module, a storage module, and a communication module. The processing module may be configured to control and manage an action of the terminal device or the network device. For example, the processing module may be configured to support the terminal device or the network device in performing a step performed by a processing unit. The storage module may be configured to support storage of program code, data, and the like. The communication module may be configured to support the terminal device or the network device in communicating with another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processing (digital signal processing, DSP) and a microprocessor. The storage module may be a memory. The communication module may be specifically a device that interacts with another electronic device, like a radio frequency circuit, a Bluetooth chip, or a Wi-Fi chip.

For example, FIG. 8 is a block diagram of a communication apparatus 500 according to an embodiment of this application. The communication apparatus 500 may correspond to the terminal device described in the foregoing communication methods, or may be a chip or a component used in a terminal device. In addition, modules or units in the communication apparatus 500 are separately configured to perform actions or processing processes performed by the terminal device in any one of the foregoing communication methods.

As shown in FIG. 8, the communication apparatus 500 includes a transceiver unit 510 and a processing unit 520. The transceiver unit 510 is configured to specifically send or receive a signal under driving of the processing unit 520.

Further, the communication apparatus 500 may include a storage unit, and the transceiver unit 510 may be a transceiver, an input/output interface, or an interface circuit. The storage unit is configured to store instructions executed by the transceiver unit 510 and the processing unit 520. The transceiver unit 510, the processing unit 520, and the storage unit are coupled to each other. The storage unit stores the instructions. The processing unit 520 is configured to execute the instructions stored in the storage unit. The transceiver unit 510 is configured to send or receive a specific signal under driving of the processing unit 520.

It should be understood that for a specific process in which units in the communication apparatus 500 perform the foregoing corresponding steps, refer to the foregoing descriptions related to the terminal device in the communication method. For brevity, details are not described herein again.

Optionally, the transceiver unit 510 may include a receiving unit (module) and a sending unit (module), configured to perform the steps of receiving information and sending information by the terminal device in embodiments of the foregoing communication methods.

It should be understood that the transceiver unit 510 may be a transceiver, an input/output interface, or an interface circuit. The storage unit may be a memory. The processing unit 520 may be implemented by a processor. As shown in FIG. 9, a communication apparatus 600 may include a processor 610, a memory 620, a transceiver 630, and a bus system 640. All components of the communication apparatus 600 are coupled together through the bus system 640. In addition to a data bus, the bus system 640 may include a power bus, a control bus, a status signal bus, and the like. However, for clarity, all buses are marked as the bus system 640 in FIG. 9. For ease of indication, FIG. 9 shows only an example.

The communication apparatus 500 shown in FIG. 8 or the communication apparatus 600 shown in FIG. 9 can implement the steps performed by the terminal device in the foregoing embodiments of the communication methods. For similar descriptions, refer to the descriptions in the foregoing corresponding methods. To avoid repetition, details are not described herein again.

The communication apparatus 500 shown in FIG. 8 or the communication apparatus 600 shown in FIG. 9 may be a terminal device.

FIG. 10 is a block diagram of a communication apparatus 700 according to an embodiment of this application. The communication apparatus 700 may correspond to the network device described in the foregoing communication methods, or may be a chip or a component used in a network device. In addition, modules or units in the communication apparatus 700 are separately configured to perform actions or processing processes performed by the network device in the foregoing communication methods.

As shown in FIG. 10, the communication apparatus 700 may include a processing unit 710 and a transceiver unit 720. The transceiver unit 720 is configured to specifically send or receive a signal under driving of the processing unit 710.

It should be understood that for a specific process in which units in the communication apparatus 700 perform the foregoing corresponding steps, refer to the foregoing descriptions related to the network device in the communication method. For brevity, details are not described herein again.

Optionally, the transceiver unit 720 may include a receiving unit (module) and a sending unit (module), configured to perform the steps of receiving information and sending information by the network device in embodiments of the foregoing communication methods.

Further, the communication apparatus 700 may further include a storage unit. The transceiver unit 720 may be a transceiver, an input/output interface, or an interface circuit. The storage unit is configured to store instructions executed by the transceiver unit 720 and the processing unit 710. The transceiver unit 720, the processing unit 710, and the storage unit are coupled to each other. The storage unit stores the instructions. The processing unit 710 is configured to execute the instructions stored in the storage unit. The transceiver unit 720 is configured to send or receive a specific signal under driving of the processing unit 710.

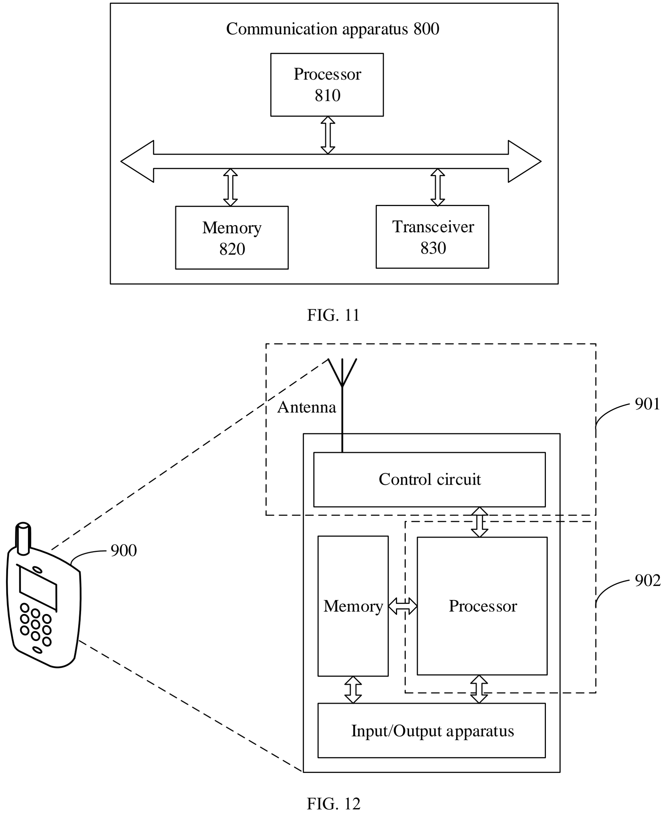

It should be understood that the transceiver unit 720 may be a transceiver, an input/output interface, or an interface circuit. The storage unit may be a memory. The processing unit 710 may be implemented by a processor. As shown in FIG. 11, a communication apparatus 800 may include a processor 810, a memory 820, and a transceiver 830.

The communication apparatus 700 shown in FIG. 10 or the communication apparatus 800 shown in FIG. 11 can implement the steps performed by the network device in the foregoing embodiments of the communication methods. For similar descriptions, refer to the descriptions in the foregoing corresponding methods. To avoid repetition, details are not described herein again.

It should be further understood that the communication apparatus 700 shown in FIG. 10 or the communication apparatus 800 shown in FIG. 11 may be a network device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SOC).

FIG. 12 is a diagram of a structure of a terminal device 900 according to this application. The communication apparatus 500 or the communication apparatus 600 may be configured in the terminal device 900. Alternatively, the communication apparatus 600 or the communication apparatus 500 may be the terminal device 900. In other words, the terminal device 900 may perform actions performed by the terminal device in the foregoing communication methods. Optionally, for ease of description, FIG. 12 shows only main components of the terminal device. As shown in FIG. 12, the terminal device 900 includes a processor, a memory, a control circuit, an antenna, and an input/output apparatus.

The processor is mainly configured to: process a communication protocol and communication data; control the entire terminal device; execute a software program; and process data of the software program. For example, the processor is configured to support the terminal device in performing actions described in the foregoing signal transmission method embodiments. The memory is mainly configured to store the software program and the data, for example, store the antenna port indication table described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data (for example, the foregoing first configuration information) is sent to the terminal device, the radio frequency circuit receives the radio frequency signal through the antenna, converts the radio frequency signal into a baseband signal, and outputs the baseband signal to the processor. The processor converts the baseband signal into data, and processes the data.

Persons skilled in the art may understand that, for ease of description, FIG. 12 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 12. Persons skilled in the art may understand that the baseband processor and the central processing unit each may be an independent processor, and are interconnected by using a technology such as a bus. Persons skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have sending and receiving functions may be considered as a transceiver unit 901 in the terminal device 900, and the processor having a processing function may be considered as a processing unit 902 in the terminal device 900. As shown in FIG. 12, the terminal device 900 includes the transceiver unit 901 and the processing unit 902. The transceiver unit may also be referred to as a transceiver, a transceiver machine, a transceiver apparatus, or the like. Optionally, a component for implementing a receiving function in the transceiver unit 901 may be considered as a receiving unit, and a component for implementing a sending function in the transceiver unit 901 may be considered as a sending unit. That is, the transceiver unit 901 includes the receiving unit and the sending unit. For example, the receiving unit may also be referred to as a receiver, a receive machine, or a receiving circuit, and the sending unit may also be referred to as a transmitter, a transmit machine, or a transmitting circuit.

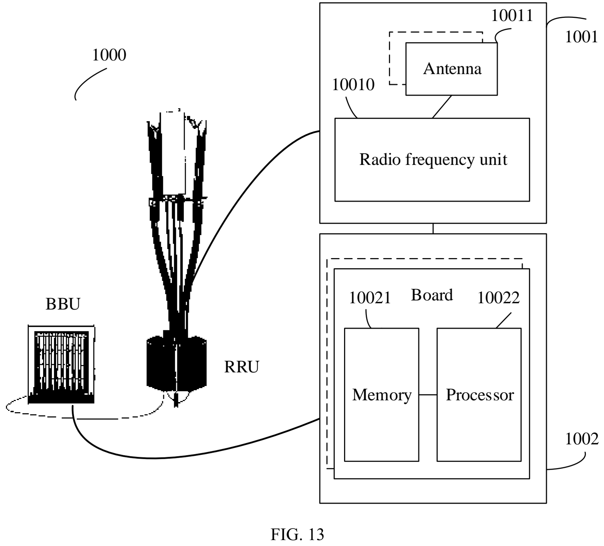

FIG. 13 is a diagram of a structure of a network device 1000 according to an embodiment of this application. The network device 1000 may be configured to implement functions of the network device in the foregoing methods. The network device 1000 includes one or more radio frequency units, for example, a remote radio unit (remote radio unit, RRU) 1001 and one or more baseband units (baseband units, BBUs) (which may also be referred to as digital units, digital units, DUs) 1002. The RRU 1001 may be referred to as a transceiver unit, a transceiver machine, a transceiver circuit, a transceiver, or the like, and may include at least one antenna 10011 and a radio frequency unit 10010. The RRU 1001 is mainly configured to: receive or send a radio frequency signal, and perform conversion between a radio frequency signal and a baseband signal, for example, configured to send a signaling message in the foregoing embodiments to a terminal device. The BBU 1002 is mainly configured to: perform baseband processing, control a network device, and the like. The RRU 1001 and the BBU 1002 may be physically disposed together; or may be physically separated, that is, a distributed base station.

The BBU 1002 is a control center of the network device, may also be referred to as a processing unit, and is mainly configured to complete baseband processing functions, such as channel coding, multiplexing, modulation, and spectrum spreading. For example, the BBU (the processing unit) 1002 may be configured to control the network device to perform an operation procedure related to the network device in the foregoing method embodiments.

In an example, the BBU 1002 may include one or more boards. A plurality of boards may jointly support a radio access network (for example, an LTE system or a 5G system) of a single access standard, or may respectively support radio access networks of different access standards. The BBU 1002 further includes a memory 10021 and a processor 10022. The memory 10021 is configured to store instructions and data that are necessary. For example, the memory 10021 stores the antenna port indication table and the like in the foregoing embodiments. The processor 10022 is configured to control the network device to perform a necessary action, for example, configured to control the network device to perform an operation procedure of the network device in the foregoing method embodiments. The memory 10021 and the processor 10022 may serve one or more boards. In other words, a memory and a processor may be disposed on each board. Alternatively, a plurality of boards may share a same memory and a same processor. In addition, a necessary circuit may further be disposed on each board.

In a possible implementation, as a system-on-a-chip (system-on-a-chip, SoC) technology develops, some or all of functions of the part 1002 and the part 1001 may be implemented by using the SoC technology, for example, by using a network device function chip. The network device function chip is integrated with devices such as a processor, a memory, and an antenna interface, and a program of a related function of the network device is stored in the memory, and is executed by the processor to implement the related function of the network device. Optionally, the network device function chip can also read a memory outside the chip to implement the related function of the network device.

It should be understood that the structure of the network device shown in FIG. 13 is merely a possible form, but should not constitute any limitation to this embodiment of this application. In this application, a possibility that there may be a network device structure in another form in the future is not excluded.

It should be understood that, the processor in embodiments of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or function according to embodiments of this application is all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication system. The communication system includes the foregoing terminal device and the foregoing network device.

An embodiment of this application further provides a computer-readable medium, configured to store computer program code. The computer program includes instructions used to perform the signal transmission method provided in the foregoing communication methods. The readable medium may be a read-only memory (read-only memory, ROM) or a random access memory (random access memory, RAM). This is not limited in embodiments of this application.

This application further provides a computer program product. The computer program product includes instructions. When the instructions are executed, a terminal device is enabled to perform operations of the terminal device corresponding to the foregoing methods, or a network device is enabled to perform operations of the network device corresponding to the foregoing methods.

An embodiment of this application further provides a chip system. The chip system includes a processing unit and a communication unit. The processing unit may be, for example, a processor, and the communication unit may be, for example, an input/output interface, a pin, a circuit, or the like. The processing unit may execute computer instructions, so that a chip in the communication apparatus performs any signal transmission method provided in the foregoing embodiments of this application.

Optionally, any communication apparatus provided in embodiments of this application may include the chip system.

Optionally, the computer instructions are stored in a storage unit.

Optionally, the storage unit is a storage unit in the chip system, for example, a register or a cache. The storage unit may alternatively be a storage unit that is in the terminal device and that is located outside the chip system, for example, a ROM or another type of static storage device that can store static information and instructions, or a RAM. The processor described above may be a CPU, a microprocessor an ASIC, or one or more integrated circuits configured to control execution of a program for the foregoing master system information transmission method. The processing unit and the storage unit may be decoupled, are disposed on different physical devices respectively, and are connected in a wired or wireless manner to implement respective functions of the processing unit and the storage unit, to support the chip system in implementing various functions in the foregoing embodiments. Alternatively, the processing unit and the memory may be coupled to a same device.

The terms "uplink" and "downlink" in this application are used to describe a data/information transmission direction in a specific scenario. For example, an "uplink" direction is usually a direction in which data/information is transmitted from a terminal device to a network side, or a direction in which data/information is transmitted from a distributed unit to a central unit, and a "downlink" direction is usually a direction in which data/information is transmitted from a network side to a terminal device, or a direction in which data/information is transmitted from a central unit to a distributed unit. It may be understood that "uplink" and "downlink" are only used to describe transmission directions of data/information, and specific devices for starting and ending the data/information transmission are not limited.

In this application, names may be assigned to various objects such as messages/ information/devices/network
elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effect embodied/performed by the technical terms in the technical solutions.

Persons of ordinary skill in the art may be aware that all or some of the methods in embodiments of this application may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, like a server, integrating one or more usable media.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

Persons of ordinary skill in the art may understand that all or some of the processes of the methods in embodiments may be implemented by a computer program instructing related hardware. The program may be stored in a computer-readable storage medium. When the program runs, the procedures of the method embodiments are performed. The storage medium may include any medium that can store program code, such as a ROM or a random access memory RAM, a magnetic disk, or a compact disc.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

In the foregoing embodiments, descriptions of each embodiment have respective focuses. For a part that is not described in detail or recorded in an embodiment, refer to related descriptions in another embodiment.

It should be understood that, in the descriptions of the specification and the appended claims of this application, the terms "include", "including", "have", and any variant thereof are intended to cover a non-exclusive inclusion, and all mean "including but not limited to", unless otherwise specially emphasized. For example, processes, methods, systems, products, or devices that include a series of steps or modules are not limited to the steps or modules that are clearly listed, but may include other steps or modules that are not clearly listed or that are inherent to the processes, methods, products, or devices.

In descriptions of this application, unless otherwise specified, "/" indicates an "or" relationship between associated objects. For example, A/B may indicate A or B. In this application, "and/or" describes an association relationship between associated objects and indicates that three relationships may exist. For example, A and/or B may indicate the following three cases: Only A exists, both A and B exist, and only B exists, where A and B may be singular or plural.

In addition, in the descriptions of this application, "a plurality of" means two or more unless otherwise specified. "At least one of the following" or a similar expression thereof means any combination of these items, including any combination of a single item or a plurality of items. For example, at least one of a, b, or c may represent a, b, c, a and b, a and c, b and c, or a and b and c. Herein, a, b, and c may be singular or plural.

As used in the specification of this application and the appended claims, the term "if" may be interpreted as "when" or "once" or "in response to determining" or "in response to detecting" depending on the context. Similarly, the phrase "if it is determined" or "if [the described condition or event] is detected" may be interpreted, depending on the context, to mean "once determined" or "in response to determining" or "once [the described condition or event] is detected" or "in response to detecting [the described condition or event]".

In addition, in the descriptions of the specification and the appended claims of this application, the terms "first", "second", and the like are intended to distinguish between similar objects but do not necessarily indicate a specific order or sequence, and shall not be understood as an indication or implication of relative importance or implicit indication of a quantity of indicated technical features. It should be understood that the data used in such a way is interchangeable in appropriate circumstances, so that embodiments described herein can be implemented in an order other than the content illustrated or described herein. A feature limited by "first" and "second" may explicitly or implicitly include at least one of the features.

In embodiments of this application, words such as "example" or "for example" indicate giving an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, wherein the method comprises:
sending a radio resource control RRC resume request message to a first network device;
receiving an RRC resume message sent by the first network device;
entering an RRC connected state from an RRC inactive state; and
receiving a first multicast based on a first multicast broadcast service radio bearer MRB, wherein the first MRB is determined based on the RRC resume message and first multicast configuration information, the first multicast configuration information is obtained from a second network device, and the second network device is a network device in a last serving cell in an RRC connected state.

2. The communication method according to claim 1, wherein before sending the RRC resume request message to the first network device, the method comprises:
receiving, in the RRC connected state, the first multicast configuration information sent by the second network device;
receiving the first multicast based on the first MRB;
receiving a first RRC release message sent by the second network device; and
entering the RRC inactive state from the RRC connected state.

3. The communication method according to claim 2, after entering the RRC inactive state from the RRC connected state and before sending the RRC resume request message to the first network device, the method further comprises:
receiving the first multicast based on second multicast configuration information.

4. The communication method according to claim 3, wherein the second multicast configuration information is sent by the first network device, the second network device, or a third network device, and the third network device is a network device in a serving cell in the RRC inactive state.

5. The communication method according to claim 3 or 4, wherein both the first multicast configuration information and the second multicast configuration information comprise configuration information of the first MRB.

6. The communication method according to any one of claims 1 to 5, wherein the first multicast configuration information comprises an identifier of the first MRB, and the first multicast configuration information further comprises at least one of a packet data channel PDCP configuration, a radio link control RLC configuration, a media access control MAC configuration, and a physical layer configuration of the first MRB.

7. The communication method according to any one of claims 1 to 6, wherein the method comprises:
receiving the first radio resource control RRC release message sent by the second network device, wherein the first RRC release message indicates the second multicast configuration information, and the second multicast configuration information is configuration information for receiving the first multicast in an RRC non-connected state in a first cell; and
entering an RRC non-connected state from the RRC connected state.

8. The method according to claim 7, wherein
the first cell is a serving cell in which the first multicast is received in the RRC connected state.

9. The method according to claim 7, wherein
the first cell is a secondary serving cell SCell in which the first multicast is received in the RRC connected state.

10. A communication method, wherein the method comprises:
receiving a first radio resource control RRC release message sent by a second network device, wherein the first RRC release message indicates second multicast configuration information, and the second multicast configuration information is configuration information for receiving a first multicast in an RRC non-connected state in a first cell; and
entering the RRC non-connected state from an RRC connected state.

11. The communication method according to claim 10, wherein after entering the RRC non-connected state from the RRC connected state, the method further comprises:
when performing cell selection and camping on the first cell, receiving the first multicast in the RRC non-connected state in the first cell based on the second multicast configuration information.

12. The communication method according to claim 11, wherein when cell selection is performed, the first cell is preferentially selected as a serving cell.

13. The communication method according to any one of claims 10 to 12, wherein the first RRC release message comprises an identity of the first cell.

14. The communication method according to any one of claims 10 to 13, wherein the first cell is a serving cell configured with a first common frequency resource CFR, and the first common frequency resource is used to perform transmission on the first multicast.

15. The communication method according to any one of claims 10 to 14, wherein the second multicast configuration information comprises at least one of an identifier of the first multicast, an activation status of the first multicast, a multicast broadcast service control channel MCCH configuration, and a point-to-multipoint PTM configuration of the first multicast.

16. The method according to any one of claims 10 to 15, wherein
the first cell is a serving cell in which the first multicast is received in the RRC connected state.

17. The method according to any one of claims 10 to 15, wherein
the first cell is a secondary serving cell SCell in which the first multicast is received in the RRC connected state.

18. A communication method, wherein the method comprises:
sending a first radio resource control RRC release message to a terminal device, wherein the first RRC release message indicates second multicast configuration information, and the second multicast configuration information is configuration information for receiving a first multicast in an RRC non-connected state in a first cell.

19. The communication method according to claim 18, wherein the first RRC release message comprises an identity of the first cell.

20. The communication method according to claim 19, wherein the first cell is a serving cell configured with a first common frequency resource CFR, and the first common frequency resource is used to perform transmission on the first multicast.

21. The communication method according to any one of claims 18 to 20, wherein the second multicast configuration information comprises at least one of an identifier of the first multicast, an activation status of the first multicast, a multicast broadcast service control channel MCCH configuration, and a point-to-multipoint PTM configuration of the first multicast.

22. A communication method, wherein the method comprises:
receiving a first radio resource control RRC release message sent by a second network device, wherein the first RRC release message indicates a first radio access network-based notification area RNA;
entering an RRC inactive state from an RRC connected state; and
sending an RRC connection resume request message to a first network device when a first condition and a second condition are met, wherein the first network device is a network device in a serving cell, the first condition is that a first timer expires or the serving cell does not belong to the first RNA, and the RRC connection resume request message carries a first cause value; and
the second condition is that a multicast is not received in the RRC inactive state, or a multicast is received in the RRC inactive state and second multicast configuration information is sent in the serving cell, and the second multicast configuration information is configuration information for receiving a first multicast in the RRC inactive state in the serving cell.

23. The communication method according to claim 22, wherein the first cause value is RNA update.

24. The communication method according to claim 22 or 23, wherein the first multicast is a joined multicast in an active state.

25. The communication method according to any one of claims 22 to 24, wherein the second multicast configuration information is carried in a first MCCH message.

26. The communication method according to any one of claims 22 to 25, wherein the second multicast configuration information comprises at least one of an identifier of the first multicast, a G-RNTI of the first multicast, and an MRB configuration of the first multicast.

27. A communication method, wherein
receiving a first radio resource control RRC release message sent by a second network device, wherein the first RRC release message indicates a first radio access network-based notification area RNA;
entering an RRC inactive state from an RRC connected state; and
sending an RRC connection resume request message to a first network device when a first condition and a third condition are met, wherein the first network device is a network device in a serving cell, the first condition is that a first timer expires or the serving cell does not belong to the first RNA, and the RRC connection resume request message carries a second cause value; and
the third condition is that the first RRC release message indicates to receive a multicast in the RRC inactive state and second multicast configuration information is not sent in the serving cell, and the second multicast configuration information is configuration information for receiving a first multicast in the RRC inactive state in the serving cell.

28. The communication method according to claim 27, wherein the first multicast is a joined multicast in an active state.

29. The communication method according to claim 27 or 28, wherein the second multicast configuration information is carried in a first MCCH message.

30. The communication method according to any one of claims 27 to 29, wherein that the second multicast configuration information is not sent in the serving cell comprises:
the first multicast broadcast service control channel MCCH message sent in the serving cell does not comprise the second multicast configuration information; or
first system information is not sent in the serving cell, and the first system information is used to send configuration information of the first MCCH.

31. The communication method according to any one of claims 27 to 30, wherein the second cause value is one of mobile originated data mo-Data, mobile originated signaling mo-Signaling, mobility terminal access mt-Access, or multicast broadcast service access.

32. The communication method according to any one of claims 27 to 30, wherein the second cause value is a third cause value, and the third cause value indicates multicast broadcast service access and RNA update.

33. The communication method according to claim 32, wherein after sending the RRC connection resume request message to the first network device, the method further comprises:
receiving a second RRC release message sent by the first network device; and
obtaining the second multicast configuration information.

34. The communication method according to claim 33, wherein the second multicast configuration information is carried in the second RRC release message, or the second multicast configuration information is carried in the first system information and/or the first MCCH message in the serving cell.

35. A communication method, wherein the method comprises:
receiving a first radio resource control RRC connection resume request message sent by a terminal device, wherein the RRC connection resume request message carries a third cause value, the third cause value indicates RNA update and that second multicast configuration information is not sent in a serving cell, and the second multicast configuration information is configuration information for receiving a first multicast in an RRC inactive state in the serving cell.

36. The communication method according to claim 35, wherein the method further comprises:
sending a context retrieval request message to a second network device when a multicast in the RRC inactive state can be provided, wherein the context retrieval request message carries the third cause value;
receiving a context retrieval failure message sent by the second network device, wherein the context retrieval failure message comprises a second RRC release message and an identifier of the first multicast; and
sending the second multicast configuration information and the second RRC release message to the terminal device.

37. The communication method according to claim 36, wherein the second multicast configuration information is carried in the second RRC release message, or the second multicast configuration information is carried in first system information and/or a first multicast broadcast service control channel MCCH message in the serving cell.

38. The communication method according to claim 36 or 37, wherein the context retrieval request message further carries a set of an identifier of a multicast that can be provided for the RRC inactive state, and the set of the identifier of the multicast comprises the identifier of the first multicast.

39. The method according to claim 36, wherein the method further comprises:
sending the context retrieval request message to the second network device when providing the multicast in the RRC inactive state is not supported, wherein the context retrieval request message does not carry the third cause value;
receiving a context retrieval response message sent by the second network device, wherein the context retrieval response message comprises a context of the terminal device; and
sending an RRC resume message to the terminal device, wherein the RRC resume message indicates the terminal device to enter an RRC connected state from the RRC inactive state.

40. A communication method, wherein the method comprises:
sending a first radio resource control RRC release message to a terminal device, wherein the first RRC release message indicates a first radio access network-based notification area RNA;
receiving a context retrieval request message sent by a first network device, wherein the context retrieval request message carries a third cause value, the third cause value indicates RNA update and that second multicast configuration information is not sent in a serving cell of the terminal device, the second multicast configuration information is configuration information for receiving a first multicast in an RRC inactive state in the serving cell, and the first network device is a network device in the serving cell; and
if the serving cell belongs to the first RNA, sending a context retrieval failure message to the first network device, wherein the context retrieval failure message carries a second RRC release message and an identifier of the first multicast; or
if the serving cell does not belong to the first RNA, sending a context retrieval response message to the first network device, wherein the context retrieval response message comprises a context of the terminal device.

41. The communication method according to claim 40, wherein the context retrieval request message further carries a set of an identifier of a multicast that can be provided by the first network device for the RRC inactive state, and the set of the identifier of the multicast comprises the identifier of the first multicast.

42. A communication apparatus, configured to perform the communication method according to any one of claims 1 to 41.

43. A computer-readable storage medium, wherein the computer-readable storage medium stores a computer program, and when the computer program is executed by a processor, the communication method according to any one of claims 1 to 41 is implemented.

44. A chip system, comprising a processor coupled to a memory, wherein the processor is configured to execute code in the memory, to implement the communication method according to any one of claims 1 to 41.

45. A computer program product, wherein the computer program product comprises a computer program, when being executed by a processor, the computer program is used to perform the communication method according to any one of claims 1 to 41.
